(19) Europäisches Patentamt / European Patent Office / Office européen des brevets

(11) **EP 3 263 940 B1**

(12) **EUROPEAN PATENT SPECIFICATION**

(45) Date of publication and mention
of the grant of the patent:
**02.01.2019 Bulletin 2019/01**

(21) Application number: **16755474.0**

(22) Date of filing: **23.02.2016**

(51) Int Cl.:
*F16D 43/18* *(2006.01)*        *B60W 10/02* *(2006.01)*
*B60W 10/04* *(2006.01)*       *F16H 59/70* *(2006.01)*
*F16D 48/00* *(2006.01)*

(86) International application number:
**PCT/JP2016/055240**

(87) International publication number:
**WO 2016/136730 (01.09.2016 Gazette 2016/35)**

(54) **POWER UNIT AND STRADDLE-TYPE VEHICLE PROVIDED WITH POWER UNIT**

ANTRIEBSEINHEIT UND GRÄTSCHSITZFAHRZEUG MIT ANTRIEBSEINHEIT

UNITÉ DE PUISSANCE ET VÉHICULE DU TYPE CHEVAUCHÉ COMPORTANT UNE UNITÉ DE PUISSANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.02.2015 JP 2015037177**

(43) Date of publication of application:
**03.01.2018 Bulletin 2018/01**

(73) Proprietor: **Yamaha Hatsudoki Kabushiki Kaisha Iwata-shi, Shizuoka 438-8501 (JP)**

(72) Inventor: **ARAI, Katsuhiro Iwata-shi, Shizuoka 438-8501 (JP)**

(74) Representative: **Zimmermann, Tankred Klaus et al Schoppe, Zimmermann, Stöckeler Zinkler, Schenk & Partner mbB Patentanwälte Radlkoferstrasse 2 81373 München (DE)**

(56) References cited:
**JP-A- 2004 076 906        JP-A- 2008 256 122
JP-A- 2008 261 486        US-A1- 2006 032 689
US-A1- 2008 091 324**

## Description

## Technical Field

The present invention relates to a power unit and a straddled vehicle including the power unit.

## Background Art

Conventionally, there are saddle-type or straddled vehicles which include a continuously variable transmission (CVT) and a clutch of centrifugal type (hereinafter, referred to as a centrifugal clutch). A centrifugal clutch has a centrifugal clutch upstream member that is mechanically connected to a drive source for rotation and a centrifugal clutch downstream member that is mechanically connected to or disconnected from the centrifugal clutch upstream member by means of a centrifugal force that is generated according to the rotation of the centrifugal clutch upstream member, whereby a transmission of torque is made or cut off between a centrifugal clutch upstream path, which is defined as a path from the drive source to the centrifugal clutch upstream member, and a centrifugal clutch downstream path, which is defined as a path from the centrifugal clutch downstream member to a driving wheel, by means of centrifugal force that is generated by the rotation of the centrifugal clutch upstream member.

This type of straddled vehicle includes a traction control system (TCS) configured to suppress the occurrence of slippage of the driving wheel by executing a control, for example, to reduce the engine torque when a slip is detected on the driving wheel (for example, refer to Patent Literature 1).

## Prior Art Literature

## Patent Literature

Patent Literature 1: JP-A-5-240076
US 2006/0032689 A discloses the features of the preamble of claim 1.

## Summary of the Invention

## Problem that the Invention is to solve

In the straddled vehicle disclosed in Patent Literature 1 which includes a centrifugal clutch, however, when the slip on the driving wheel is controlled, on some occasions, a riding person (hereinafter, referred to as a rider) may feel discomfort.
An object of the invention is to provide a power unit that can reduce discomfort that is felt by a rider while the driving force of a driving wheel is being controlled. Another object of the invention is to provide a straddled vehicle that includes the power unit.

## Means for Solving the Problem

According to an embodiment of the invention, provided is a power unit mounted in a straddled vehicle, comprising:

  a drive source configured to generate a driving force;
  a driving wheel driven by the driving force from the drive source;
  a transmission provided between the drive source and the driving wheel and configured to change a gear ratio;
  a centrifugal clutch comprising: a centrifugal clutch upstream member that is mechanically connected with the drive source to be rotated; and a centrifugal clutch downstream member that is connected to or disconnected from the centrifugal clutch upstream member by a centrifugal force generated by the rotation of the centrifugal clutch upstream member, wherein the centrifugal clutch is configured to make or cut off transmission of a torque between a centrifugal clutch upstream path and a centrifugal clutch downstream path, by the centrifugal force generated by the rotation of the centrifugal clutch upstream member, the centrifugal clutch upstream path is defined as a path from the drive source to the centrifugal clutch upstream member, and the centrifugal clutch downstream path is defined as a path from the centrifugal clutch downstream member to the driving wheel;
  a centrifugal clutch upstream rotation detection sensor configured to detect a rotation speed of the centrifugal clutch upstream path;
  a centrifugal clutch characteristics storage module configured to store centrifugal clutch characteristics indicating a relationship between rotation speeds of the centrifugal clutch upstream path and clutch torque capacities of the centrifugal clutch in a half-engaged state, wherein, in the half-engaged state, a torque is transmitted between the centrifugal clutch upstream member and the centrifugal clutch downstream member by the centrifugal clutch upstream member sliding relative to the centrifugal clutch downstream member;
  a centrifugal clutch characteristics estimation module configured to estimate the centrifugal clutch characteristics based on a rotation speed of the centrifugal clutch upstream path;
  a centrifugal clutch characteristics updating module configured to update the centrifugal clutch characteristics stored in the centrifugal clutch characteristics storage module to the centrifugal clutch characteristics that are estimated by the centrifugal clutch characteristics estimation module; and
  a driving force control module configured to control a driving force of the driving wheel based on the centrifugal clutch characteristics that are read out from the centrifugal clutch characteristics storage module.

In the straddled vehicle in which the centrifugal clutch is to be mounted, when the driving force of the driving wheel is controlled, the driver (the riding person) may feel discomfort on some occasions. Namely, since the straddled vehicle exhibits a behavior that is different from one that the rider expects, the rider feels a discomfort. As a result of having made every effort to study about causes for this problem, the inventor of the invention has come to a conclusion that the centrifugal clutch characteristics are changed by the deterioration with age of the centrifugal clutch or a change in the external environments and the change in the centrifugal clutch characteristics influences the control of the driving force of the driving wheel. The centrifugal clutch characteristics means a relationship between the rotation speed of the centrifugal clutch upstream path and the clutch torque capacity of the centrifugal clutch in a half-engaged state. The centrifugal clutch has the centrifugal clutch upstream member that is mechanically connected with the drive source to be rotated and the centrifugal clutch downstream member that is connected to or disconnected from the centrifugal clutch upstream member by means of the centrifugal force generated by the rotation of the centrifugal clutch upstream member. The centrifugal clutch is configured to make or cut off transmission of torque between the centrifugal clutch upstream path, which is defined as a path from the drive source to the centrifugal clutch upstream member, and the centrifugal clutch downstream path, which is defined as a path from the centrifugal clutch downstream member to the driving wheel, by means of the centrifugal force generated by the rotation of the centrifugal clutch upstream member. Due to this, in the centrifugal clutch, clutch torque that is transmitted to the centrifugal clutch downstream path is determined not by the intention of the rider but by the centrifugal force that is generated by the rotation of the centrifugal clutch upstream member. Consequently, in case the centrifugal clutch characteristics are changed, although the rotation speed of the centrifugal clutch upstream path remains the same, the clutch torque that is transmitted to the centrifugal clutch downstream path differs. This is because the clutch torque that is transmitted to the centrifugal clutch downstream path is determined according to the clutch torque capacity of the centrifugal clutch in the half-engaged state. Due to this, in a case where the centrifugal clutch characteristics change greatly, the control of the driving force of the driving wheel is influenced greatly, thereby making the rider easily feel discomfort. In order to solve this problem, the centrifugal clutch characteristics are estimated by the centrifugal clutch characteristics estimation module, and the centrifugal clutch characteristics stored in the centrifugal clutch characteristics storage module are updated to the centrifugal clutch characteristics that are estimated by the centrifugal clutch characteristics estimation module. Then, the driving force control module controls the driving force of the driving wheel based on the centrifugal clutch characteristics that are read out from the centrifugal clutch characteristics storage module. In this way, since the centrifugal clutch characteristics stored in the centrifugal clutch characteristics storage module are updated to the centrifugal clutch characteristics that are estimated by the centrifugal clutch characteristics estimation module, it is possible to restrain the control of the driving force from being influenced by the change in the centrifugal clutch characteristics. Consequently, it is possible to provide the power unit that can reduce the discomfort felt by the rider while the driving force of the driving wheel is being controlled.

The centrifugal clutch characteristics estimation module may be configured to estimate the centrifugal clutch characteristics based on a rotation speed of the centrifugal clutch upstream path and a clutch torque capacity in a first state of the centrifugal clutch while the straddled vehicle is running.

According to the configuration described above, since the centrifugal clutch characteristics are estimated based on the rotation speed of the centrifugal clutch upstream path and the clutch torque capacity in the first state, it is possible to estimate the centrifugal clutch characteristics relatively easily.

The centrifugal clutch characteristics estimation module may be configured to estimate the centrifugal clutch characteristics based on a rotation speed of the centrifugal clutch upstream path and a clutch torque capacity in a first state of the centrifugal clutch while the straddled vehicle is running, and a rotation speed of the centrifugal clutch upstream path and a clutch torque capacity in a second state of the centrifugal clutch that differs from the first state while the straddled vehicle is running.

According to the configuration described above, since the centrifugal clutch characteristics are estimated based on the rotation speed of the centrifugal clutch upstream path and the clutch torque capacity in the first state and the rotation speed of the centrifugal clutch upstream path and the clutch torque capacity in the second state, it is possible to estimate the centrifugal clutch characteristics with higher accuracy.

The centrifugal clutch characteristics estimation module may be configured to estimate the centrifugal clutch characteristics based on a rotation speed of the centrifugal clutch upstream path and a clutch torque capacity in a clutch-out state where the centrifugal clutch is switched from an engaged state to a disengaged state.

According to the configuration described above, since the centrifugal clutch characteristics are estimated based on the rotation speed of the centrifugal clutch upstream path and the clutch torque capacity in the clutch-out state, it is possible to estimate the centrifugal clutch characteristics relatively easily.

The power unit may include further:

    a centrifugal clutch downstream rotation detection sensor configured to detect a rotation speed of the centrifugal clutch downstream path, and

the centrifugal clutch characteristics estimation module may be configured to determine whether or not the centrifugal clutch is in the clutch-out state based on a rotation speed of the centrifugal clutch upstream path and a rotation speed of the centrifugal clutch downstream path.

According to the configuration described above, the centrifugal clutch characteristics estimation module can determine whether or not the centrifugal clutch is in the clutch-out state based on the rotation speed of the centrifugal clutch upstream path and the rotation speed of the centrifugal clutch downstream path. This makes it possible to estimate the centrifugal clutch characteristics based on the rotation speed of the centrifugal clutch upstream path and the clutch torque capacity in the clutch-out state.

The centrifugal clutch characteristics estimation module may be configured to determine that the centrifugal clutch is in the clutch-out state when a deceleration of the rotation speed of the centrifugal clutch upstream path is equal to or larger than a predetermined value.

According to the configuration described above, when the deceleration of the rotation speed of the centrifugal clutch upstream path is equal to or larger than the predetermined value, it can be determined that the centrifugal clutch is in the clutch-out state. This makes it possible to estimate the centrifugal clutch characteristics based on the rotation speed of the centrifugal clutch upstream path and the clutch torque capacity in the clutch-out state.

The centrifugal clutch characteristics estimation module may be configured to determine that the centrifugal clutch is in the clutch-out state when a deceleration of the rotation speed of the centrifugal clutch upstream path is equal to or larger than a predetermined value and the rotation speed of the centrifugal clutch upstream path is equal to or smaller than a predetermined value.

According to the configuration described above, when the deceleration of the rotation speed of the centrifugal clutch upstream path is equal to or larger than the predetermined value and the rotation speed of the centrifugal clutch upstream path is equal to or smaller than the predetermined value, it can be determined that the centrifugal clutch is in the clutch-out state. In this way, it is possible to estimate the centrifugal clutch characteristics based on the rotation speed of the centrifugal clutch upstream path and the clutch torque capacity in the clutch-out state.

The centrifugal clutch characteristics estimation module may be configured to obtain a rotation speed of the centrifugal clutch upstream path and the clutch torque capacity in the clutch-out state by multiplying a rotation speed of the centrifugal clutch upstream path by a predetermined coefficient.

According to the configuration described above, it is possible to obtain a rotation speed of the centrifugal clutch upstream path and the clutch torque capacity in the clutch-out state by multiplying a rotation speed of the centrifugal clutch upstream path by the predetermined coefficient. As a result, it is possible to estimate the centrifugal clutch characteristics.

The power unit may further comprise:

a centrifugal clutch downstream rotation detection sensor configured to detect a rotation speed of the centrifugal clutch downstream path,
wherein,
the transmission is a continuously variable transmission for changing gear ratios continuously in a stepless manner,
the centrifugal clutch is provided on a path between the transmission and the driving wheel, and
the centrifugal clutch characteristics estimation module is configured to obtain a relationship between the rotation speed of the centrifugal clutch upstream path and the clutch torque capacity in the clutch-out state based on a rotation speed of the centrifugal clutch downstream path and a Low gear ratio of the transmission.

According to the configuration described above, it is possible to estimate the centrifugal clutch characteristics based on the rotation speed of the centrifugal clutch downstream path and the Low gear ratio of the transmission.

The power unit may further comprise:

a centrifugal clutch downstream rotation detection sensor configured to detect a rotation speed of the centrifugal clutch downstream path,
wherein the centrifugal clutch characteristics estimation module is configured to estimate the centrifugal clutch characteristics based on a rotation speed of the centrifugal clutch upstream path and a clutch torque capacity in a clutch stall state when the rotation speed of the centrifugal clutch downstream path is increasing and a throttle is opened fully, wherein in the clutch stall state, the rotation speed of the centrifugal clutch upstream path becomes substantially constant for a certain length of time.

According to the configuration described above, it is possible to estimate the centrifugal clutch characteristics based on the rotation speed of the centrifugal clutch upstream path and the clutch torque capacity in the clutch stall state.

The power unit may further comprise:

a transmission upstream rotation detection sensor configured to detect a rotation speed on an upstream side of the transmission;

a transmission downstream rotation detection sensor configured to detect a rotation speed on a downstream side of the transmission;

a Low gear ratio storage module configured to store a Low gear ratio of the transmission;

a Low gear ratio estimation module configured to obtain a plurality of samples, each indicating a relationship between a rotation speed on the upstream side of the transmission and a rotation speed on the downstream side of the transmission and estimate the Low gear ratio based on the plurality of samples in response to determining that a throttle angle is constant and a rotation speed of the centrifugal clutch downstream path is increasing after the straddled vehicle starts running from a standstill state; and

a Low gear ratio updating module configured to update the Low gear ratio stored in the Low gear ratio storage module to the Low gear ratio estimated by the Low gear ratio estimation module,

wherein the driving force control module is configured to control the driving force of the driving wheel, based on the centrifugal clutch characteristics read out from the centrifugal clutch characteristics storage module and the Low gear ratio read out from the Low gear ratio storage module.

The driving force of the driving wheel is influenced not only by a change in centrifugal clutch characteristics but also by a change in the Low gear ratio of the transmission. Then, the Low gear ratio of the transmission is estimated based on the samples, each indicating the relationship between the rotation speed on the upstream side of the transmission and the rotation speed on the downstream side of the transmission, and the Low gear ratio stored in the Low gear ratio storage module is updated to the Low gear ratio estimated by the Low gear ratio estimation module. Then, the driving force control module controls the driving force of the driving wheel based on not only the centrifugal clutch characteristics that are read out from the centrifugal clutch characteristics storage module but also the Low gear ratio that is read out from the Low gear ratio storage module. In this way, it is possible to restrain the control of the driving force of the driving wheel from being influenced by a change in centrifugal clutch characteristics and a change in Low gear ratio. Consequently, it is possible to provide the power unit that can reduce further the discomfort felt by the rider while the driving force of the driving wheel is being controlled.

The Low gear ratio estimation module may be configured to estimate the Low gear ratio by approximating linearly the plurality of samples. A straight line obtained by approximating linearly the plurality of samples may pass through a point where a rotation speed on the upstream side of the transmission and a rotation speed on the downstream side of the transmission are both zero.

According to the configuration described above, it is possible to estimate the Low gear ratio of the transmission by approximating linearly the plurality of samples.

The driving force control module may be configured to execute a traction control based on the centrifugal clutch characteristics that are read out from the centrifugal clutch characteristics storage module.

According to the configuration described above, it is possible to provide the straddled vehicle that can reduce the discomfort felt by the rider while the traction control is being performed on the driving wheel.

A straddled vehicle including the power unit may be provided.

According to the configuration described above, it is possible to provide the straddled vehicle that can reduce the discomfort felt by the rider while the driving force of the driving wheel is being controlled.

## Advantage of the Invention

According to the invention, it is possible to provide the power unit that can reduce the discomfort felt by the rider while the driving force of the driving wheel is being controlled.

## Brief Description of Drawings

Fig. 1 is an external view showing an external appearance of an exemplary straddled vehicle equipped with a power unit according to a first embodiment.

Fig. 2 is a schematic view showing an exemplary power unit according to the first embodiment.

Fig. 3 is an exploded view showing an exemplary continuously variable transmission according to the first embodiment.

Fig. 4 is a sectional view of the exemplary power unit according to the first embodiment.

Fig. 5 is a sectional view showing an exemplary centrifugal clutch according to the first embodiment.

Fig. 6 is a view showing the exemplary centrifugal clutch according to the first embodiment.

Fig. 7 is a view showing an exemplary state of the centrifugal clutch when the straddled vehicle, according to the first embodiment, is running.

Fig. 8 is a graph showing exemplary states of the centrifugal clutch according to the first embodiment.

Fig. 9 is a schematic view showing an exemplary construction of the power unit according to the first embodiment.

Fig. 10 is a block diagram showing an exemplary function of a driving force control system according to the first embodiment.

Fig. 11 is a flow chart showing an exemplary centrifugal clutch characteristics updating process according to the first embodiment.

Fig. 12 is a flow chart showing a first exemplary relationship estimation process according to the first embodiment.

Fig. 13 is a graph showing an exemplary upstream side rotation speed and an exemplary downstream side rotation speed from a point in time when the straddled vehicle, according to the first embodiment, starts running to a point in time when the straddled vehicle stops running.

Fig. 14 is a flow chart showing a second exemplary relationship estimation process according to the first embodiment.

Fig. 15 is a chart showing exemplary centrifugal clutch characteristics according to the first embodiment.

Fig. 16 is a chart showing exemplary centrifugal clutch characteristics according to the first embodiment.

Fig. 17 is a flow chart showing an exemplary centrifugal clutch characteristics updating process according to a second embodiment.

Fig. 18 is a flow chart showing an exemplary relationship estimation process according to the second embodiment.

Fig. 19 is a graph showing an exemplary upstream side rotation speed and an exemplary downstream side rotation speed from a point in time when a straddled vehicle, according to the second embodiment, starts running to a point in time when the straddled vehicle stops running.

Fig. 20 is a chart showing exemplary centrifugal clutch characteristics according to the second embodiment.

Fig. 21 is a chart showing exemplary centrifugal clutch characteristics according to the second embodiment.

Fig. 22 is a flow chart showing an exemplary centrifugal clutch characteristics updating process according to a third embodiment.

Fig. 23 is a chart showing exemplary centrifugal clutch characteristics according to the third embodiment.

Fig. 24 is a chart showing exemplary centrifugal clutch characteristics according to the third embodiment.

Fig. 25 is a flow chart showing an exemplary driving force control process according to the first to third embodiments.

Fig. 26 is a chart showing exemplary centrifugal clutch characteristics used in the driving force control process according to the first to third embodiments.

Fig. 27 is a block diagram showing an exemplary function of a driving force control system according to a fourth embodiment.

Fig. 28 is a flow chart showing an exemplary Low gear ratio updating process according to the fourth embodiment.

Fig. 29 is a graph showing an exemplary Low gear ratio estimation process and an exemplary Low gear ratio updating process according to the fourth embodiment.

Fig. 30 is a schematic view showing another exemplary construction of the power unit according to the first to fourth embodiments.

**Embodiments of the Invention**

Hereinafter, referring to the accompanying drawings, embodiments of a power unit according to the invention and a saddle-type or straddled vehicle including the power unit will be described. In the embodiments to be described below, a scooter-type motorcycle will be described as an example of the straddled vehicle. However, the scooter-type motorcycle is only an example. Thus, the straddled vehicle according to the invention may be motorcycles other than the scooter-type motorcycle, a three-wheeled motor vehicle having three wheels, an all terrain vehicle (ATV) or the like.

In the embodiments to be described below, arrows shown in the accompanying drawings will be defined as below. An arrow F denotes a front direction in a front-rear direction of a body frame of a straddled vehicle. An arrow Re denotes a rear direction in the front-rear direction of the body frame of the straddled vehicle. An arrow R denotes a right direction in a left-right direction of the body frame of the straddled vehicle. An arrow L denotes a left direction in the left-right direction of the body frame of the straddled vehicle.

In the embodiments to be described below, like reference numerals will be given to like elements, so that the repetition of similar descriptions will be omitted.

(First Embodiment)

Hereinafter, a power unit according to a first embodiment will be described.

<Configuration of Straddled Vehicle>

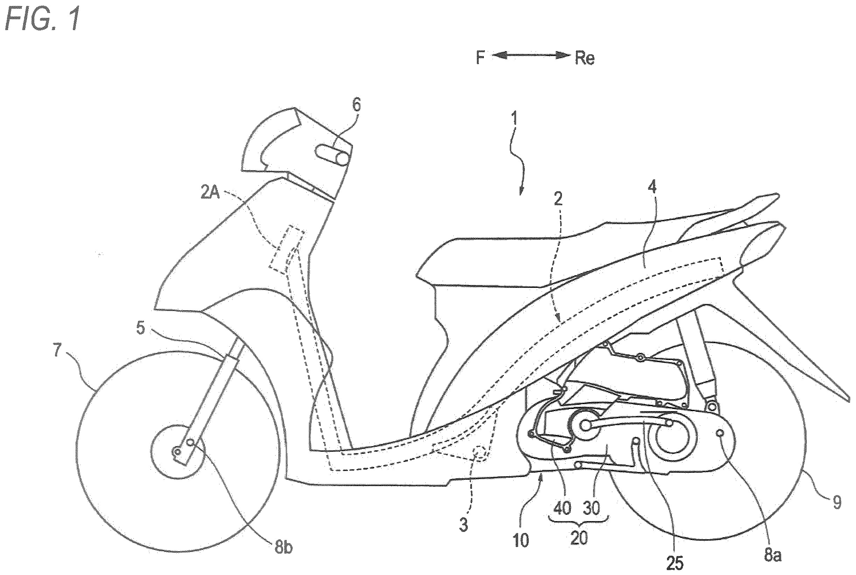

Firstly, an overall configuration of a saddle-type or straddled vehicle according to this embodiment will be described. Fig. 1 is a side view showing an external configuration of a straddled vehicle 1, which is a scooter, according to this embodiment.

As shown in Fig. 1, the straddled vehicle 1 includes a power unit 10. The straddled vehicle 1 may include, as shown in Fig. 1, a body frame 2, a pivot shaft 3, a body cover 4, a front fork 5, a handlebar 6, a driven wheel 7 and a driven wheel rotation detection sensor 8b, in addition to the power unit 10.

The body cover 4 covers sides of the body frame 2. The body frame 2 has a headstock 2A. The front fork 5 is supported on the headstock 2A. The handlebar 6 is attached to an upper portion of the front fork 5. The driven wheel rotation detection sensor 8b is provided at a lower end portion of the front fork 5, and the driven wheel 7 is supported at the lower end portion of the front fork 5. The driven wheel rotation detection sensor 8b detects a rotation speed of the driven wheel 7. In this description, a "rotation speed" means the number of times of rotation per unit time.

The power unit 10 is supported on the body frame 2 so as to oscillate by the pivot shaft 3. A centrifugal clutch downstream rotation detection sensor 8a is provided at a rear end portion of the power unit 10, and a driving wheel 9 is supported at the rear end portion of the power unit 10.

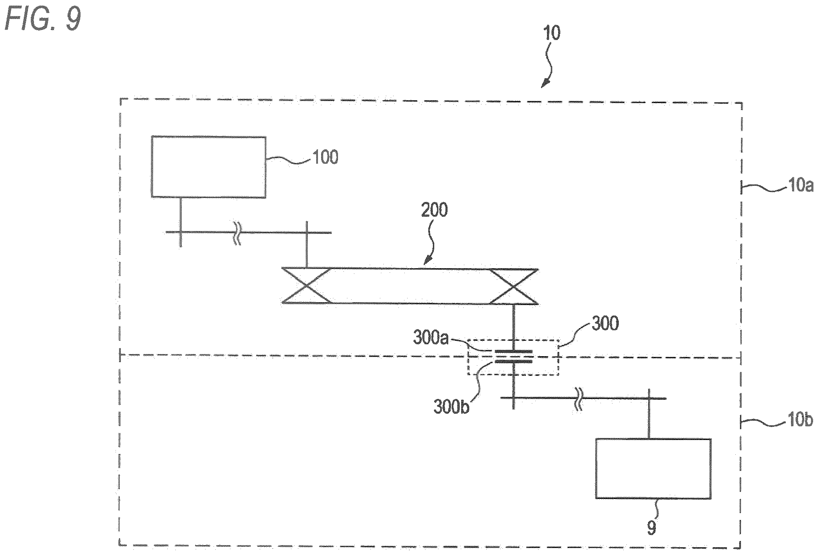

The centrifugal clutch downstream rotation detection sensor 8a is configured to detect a rotation speed of the driving wheel 9. In this description, a rotation speed of the driving wheel 9 that is detected by the centrifugal clutch downstream rotation detection sensor 8a is adopted as an example of a rotation speed at a predetermined point along a centrifugal clutch downstream path (hereinafter, referred to as a rotation speed of the centrifugal clutch downstream path). The centrifugal clutch downstream path will be described later in Fig. 9.

When the driven wheel 7 and the driving wheel 9 are not slipping, a rotation speed of the driven wheel 7 that is detected by the driven wheel rotation detection sensor 8b may be adopted as a rotation speed of the centrifugal clutch downstream path.

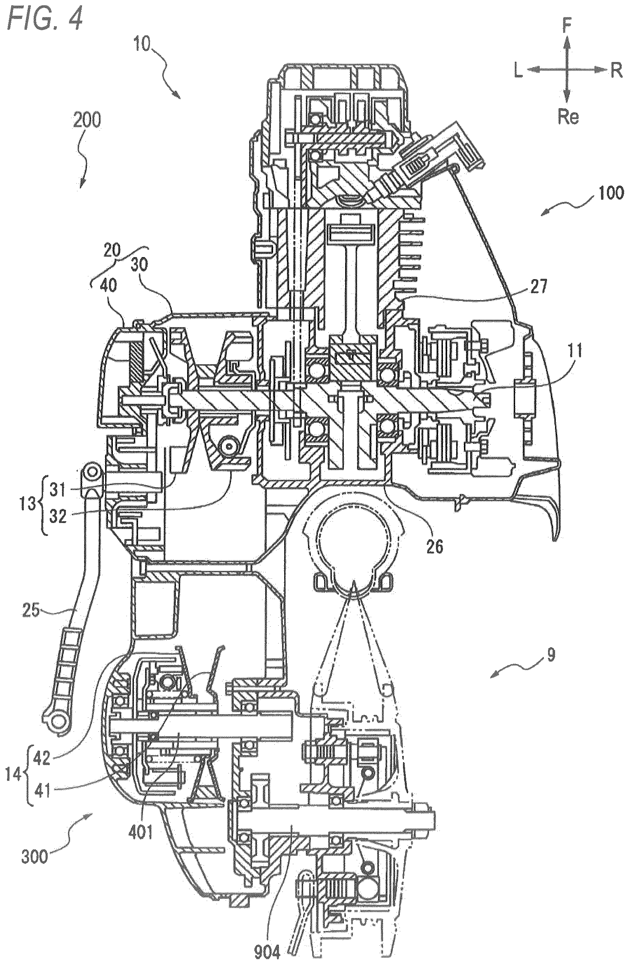

The power unit 10 may include a transmission case 20. The transmission case 20 includes a case main body 30 which is fixed to a crankcase 26 (refer to Fig. 4), which will be described later, and a cover 40 which is fixed to the case main body 30. The case 30 accommodates therein a continuously variable transmission (CVT) 200, which will be described later. A kick shaft 25 is attached to a side portion of the transmission case 20.

<Configuration of Power Unit>

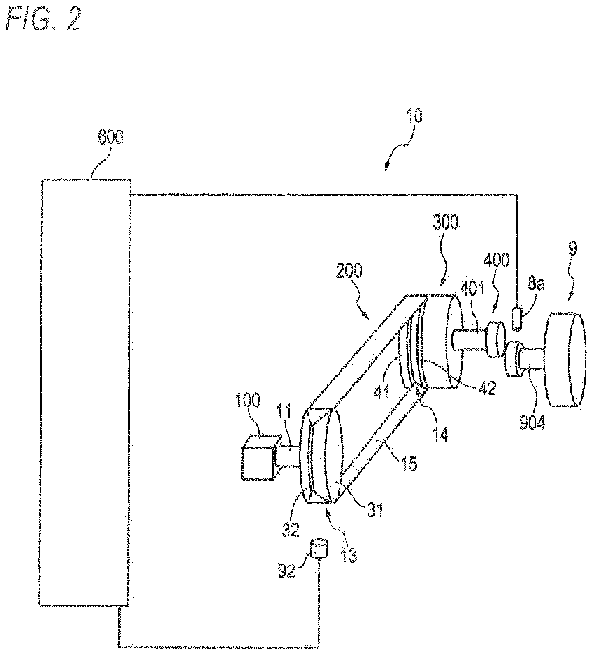

Next, referring to Fig. 2, a detailed configuration of the power unit 10 will be described. Fig. 2 shows schematically the configuration of the power unit 10.

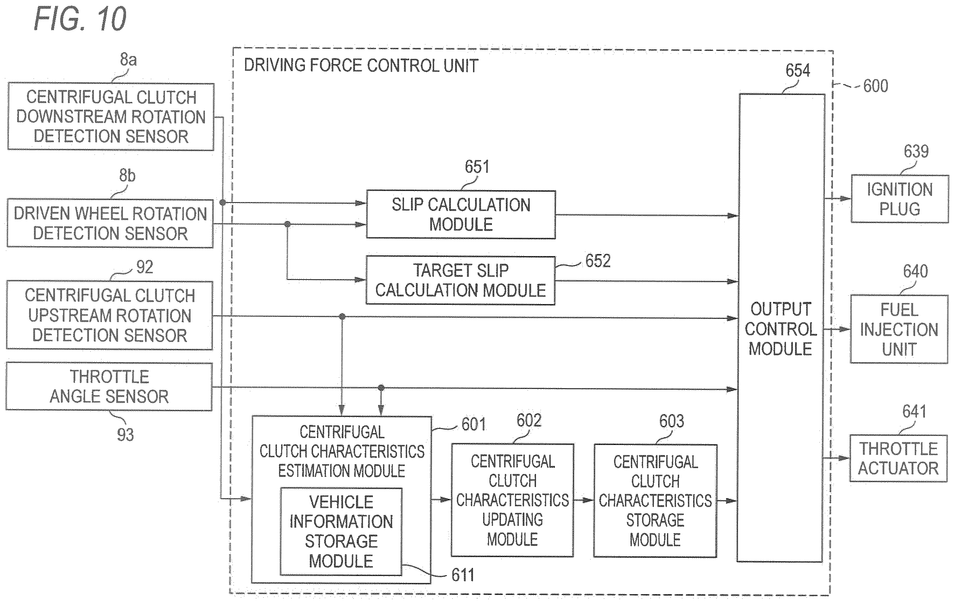

As shown in Fig. 2, in addition to the driving wheel 9 and the centrifugal clutch downstream rotation detection sensor 8a which are described above, the power unit 10 includes a drive source 100, a transmission 200, a centrifugal clutch 300, and a driving force control unit 600. As shown in Fig. 2, the power unit 10 may include a speed reduction gear 400 disposed between the centrifugal clutch 300 and the driving wheel 9. As this occurs, driving force from the drive source 100 is transmitted to the driving wheel 9 by way of the transmission 200, the centrifugal clutch 300 and the speed reduction gear 400. Additionally, the power unit 10 may include an ignition plug 639, which will be described later, a fuel injection unit 640, and throttle actuator 641 (refer to Fig. 10).

The drive source 100 is configured to generate driving force and is, for example, an engine or a motor. The driving wheel 9 is driven by means of driving force from the drive source 100.

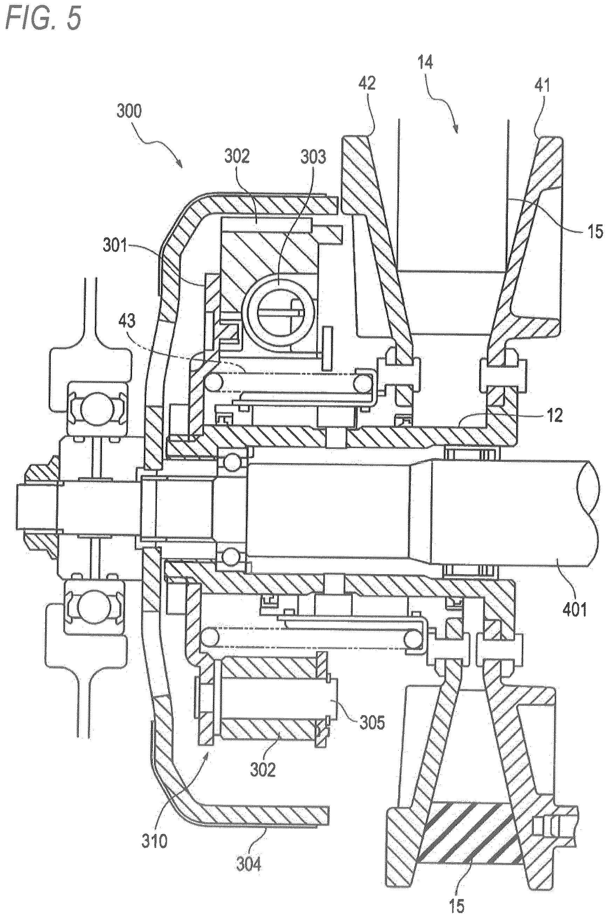

The transmission 200 is provided between the drive source 100 and the driving wheel 9 and is configured to change gear ratios. The transmission 200 is configured to transmit driving force from a primary shaft 11, which is an output shaft of the drive source 100, to an input shaft of the centrifugal clutch 300. In general, the transmission 200 includes the primary shaft 11, a secondary shaft 12 (refer to Fig. 5), a primary sheave 13, a secondary sheave 14 and a V belt 15.

In this embodiment, the primary shaft 11 is integrated into a crankshaft (not shown) of the drive source 100. The secondary shaft 12 is disposed parallel to the primary shaft 11 and is connected to a clutch plate 301 (refer to Fig. 5) of the centrifugal clutch 300. The secondary shaft 12 is a hollow center shaft of the secondary sheave 14 and is an input shaft of the centrifugal clutch 300 as depicted in Fig. 5, which will be described later.

The primary sheave 13 is provided on the primary shaft 11 to which an output of the drive source 100 is transmitted. The secondary sheave 14 is provided on the input shaft of the centrifugal clutch 300.

In this embodiment, the primary sheave 13 and the secondary sheave 14 include fixed flanges 31, 41, which are attached to the rotation shafts (the primary shaft 11 and the secondary shaft 12) and movable flanges 32, 42, respectively. The fixed flanges 31, 41 and the movable flanges 32, 42 each form a V-shaped groove around which a belt is wrapped. The V belt 15 is wrapped around the V-shaped grooves of the primary sheave 13 and the secondary sheave 14 to transmit driving force between the primary sheave 13 and the secondary sheave 14.

The primary sheave 13 includes, for example, a weight roller (not shown), so that the movable flange 32 is moved according to the rotation of the primary sheave 13 to change a groove width of the primary sheave 13. A groove width of the secondary sheave 14 changes as the groove width of the primary sheave 13 changes so that the V belt 15 can be held therein, whereby gear ratios of the transmission 200 are changed. Since the transmission mechanism in which the primary sheave 13 includes the weight roller is known, a detailed description thereof will be omitted here.

The centrifugal clutch 300 is mounted between the hollow secondary shaft 12 of the secondary sheave 14 (the input shaft of the centrifugal clutch 300 depicted in Fig. 5, which will be described later) and a gear shaft 401 (an output shaft of the centrifugal clutch 300) which passes through the secondary shaft 12.

The centrifugal clutch 300 has a centrifugal clutch upstream member 300a (refer to Fig. 9) which is mechanically connected to the drive source 100 and rotates as the drive source 100 rotates. The centrifugal clutch 300 has a centrifugal clutch downstream member 300b (refer to Fig. 9) which is mechanically connected to or disconnected from the centrifugal clutch upstream member 300a by means of centrifugal force that is generated in response to the rotation of the centrifugal clutch upstream member 300a. The centrifugal clutch upstream member 300a and the centrifugal clutch downstream member 300b are mechanically connected to or disconnected from each other depending upon the magnitude of the centrifugal force of the centrifugal clutch upstream member 300a generated according to the rotation speed of the drive source 100, whereby a transmission of torque is made or cut off between the centrifugal clutch upstream member 300a and the centrifugal clutch downstream member 300b. The centrifugal clutch 300 will be described in detail by reference to Figs. 5, 6 and 7. Additionally, the centrifugal clutch upstream member 300a and the centrifugal clutch downstream member 300b will be described in detail later by reference to Fig. 9.

The driving force control unit 600 is called an electronic control unit (ECU). The electronic control unit includes, for example, a processor (MPU: Micro Processing Unit, CPU: Central Processing Unit) and a memory (a ROM and a RAM). Vehicle information is inputted from various sensors (refer to Fig. 10) which are mounted on the straddled vehicle 1 into the driving force control unit 600.

The driving force control unit 600 is electrically connected to the sensors and receives signals outputted from the sensors, that is, signals indicating the results of detections by the sensors. The results of detections by the sensors are made of use by various pieces of vehicle information of the straddled vehicle 1. The various sensors include, for example, a centrifugal clutch upstream rotation detection sensor 92 (refer to Figs. 2, 10), the centrifugal clutch downstream rotation detection sensor 8a, the driven wheel rotation detection sensor 8b (refer to Figs, 1, 10) and a throttle angle sensor 93 (refer to Fig. 10).

The centrifugal clutch upstream rotation detection sensor 92 is configured to detect a rotation speed of the drive source 100. For example, the centrifugal clutch upstream rotation detection sensor 92 detects a rotation speed of a crankshaft (the primary shaft 11). In this description, as an example of a rotation speed at a predetermined point along a centrifugal clutch upstream path (hereinafter, referred to as a rotation speed of the centrifugal clutch upstream path), a rotation speed of the drive source 100 detected by the centrifugal clutch upstream rotation sensor 92 is adopted. The centrifugal clutch upstream path is described later with reference to Fig. 9.

The throttle angle sensor 93 (refer to Fig. 10) is a sensor for detecting a throttle angle (an accelerator pedal angle).

The driving force control unit 600 is configured to execute various processes, which will be described later, (for example, a driving force control process, a centrifugal clutch characteristics updating process, and the like, which will be described later) based on the vehicle information inputted therein to. These processes are realized by the processor executing computer programs which are stored in the memory such as the ROM. Processing operations of the driving force control unit 600 will be described in detail later.

The transmission 200 may adopt an electric continuously variable transmission (CVT). In this case, gear ratios of the transmission 200 may be controlled by the driving force control unit 600. For example, the driving force control unit 600 changes the gear ratios of the transmission 200 by referring to a gear ratio map stored in advance based on the vehicle information such as a rotation speed of the driven wheel 7 or a throttle angle. The gear ratio map is a database of various running modes used when the straddled vehicle 1 runs, in which target gear ratios of the transmission 200 corresponding, for example, to a rotation speed of the centrifugal clutch upstream path, a rotation speed of the centrifugal clutch downstream path and a throttle angle are regulated. Additionally, in this case, the power unit 10 may include a groove width control mechanism and a groove width control actuator (not shown). The groove width control mechanism is driven by the groove width control actuator to control the groove width of the primary sheave 13 by moving the movable flange 32 of the primary sheave 13. The groove width control actuator is, for example, an electric motor. The gear ratios of the transmission 200 are changed by changing the groove width of the secondary sheave 14 so that the secondary sheave 14 can hold the V belt 15 according to the groove width of the primary sheave 13.

As sensors for outputting various pieces of vehicle information to the driving force control unit 600, for example, a flange position detection sensor and a vehicle speed sensor may be provided. The flange position detection sensor detects a position of the movable flange 32. The vehicle speed sensor detects a rotation speed of the gear shaft 401 (the output shaft of the centrifugal clutch 300). The driving force control unit 600 may execute various controls by using further the various pieces of vehicle information outputted from these sensors.

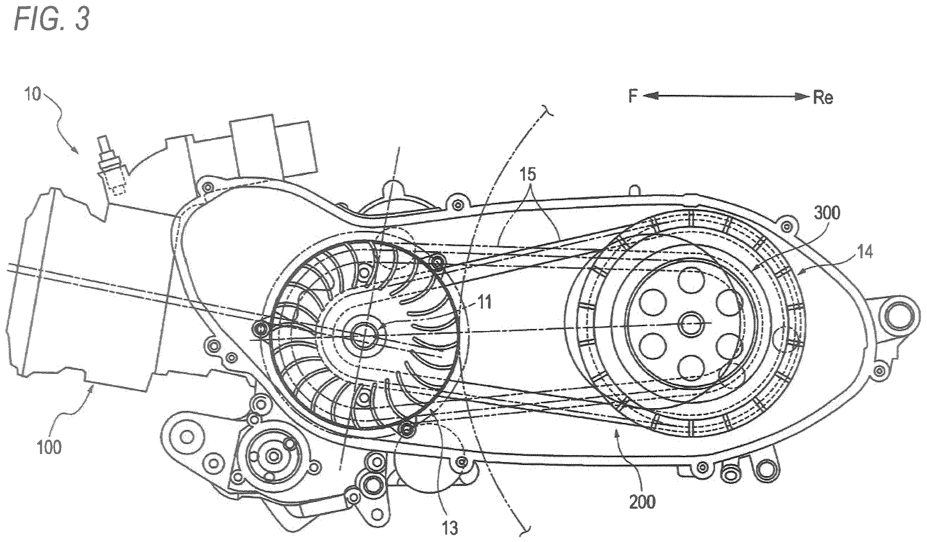

Fig. 3 is an exploded view of the transmission 200. Mainly shown in Fig. 3 are the drive source 100, the transmission 200 and the centrifugal clutch 300. According to Fig. 3, a structural relation among the drive source 100, the transmission 200, and the centrifugal clutch 300 is also understood.

Next, referring to Fig. 4, the construction of the power unit 10 will be described.

Fig. 4 shows a section of the power unit 10 in detail. As a matter of convenience in understanding, Fig. 4 shows the positions of the drive source 100, the transmission 200, the centrifugal clutch 300 and the driving wheel 9.

The power unit 10 includes the drive source 100 and the transmission 200. In addition, as shown in Fig. 4, the power unit 10 may include the crankcase 26 which accommodates the primary shaft (the crankshaft) 11 and the transmission case 20 which accommodates the transmission 200. The transmission case 20 is disposed to the left of the crankcase 26. A cylinder 27 is fixed to a front part of the crankcase 26. The driving force of the primary shaft 11 is transmitted to the driving wheel 9 by way of the transmission 200.

As described with reference to Fig. 2, the transmission 200 includes the primary sheave 13 positioned on a side of the transmission 200 facing the drive source 100 and the secondary sheave 14 positioned on a side of the transmission 200 facing the driving wheel 9. Fig. 4 shows a positional relationship between the fixed flange 31 and the movable flange 32 which make up the primary sheave 13 and a positional relationship between the fixed flange 41 and the movable flange 42 which make up the secondary sheave 14. The V belt 15 is excluded from Fig. 4 to avoid a risk of the figure becoming too crowded and untidy. Additionally, Fig. 4 shows a state where different gear ratios are realized at a front part and a rear part of the primary sheave 13 (in other words, a state where the width of the belt groove differs). This will be true with the secondary sheave 14.

The gear shaft 401 is connected to a driving wheel axle 904 via the speed reduction gear 400 (refer to Fig. 2).

<Configuration of Centrifugal Clutch>

Next, referring to Figs. 5 to 7, the construction of the centrifugal clutch 300 will be described.

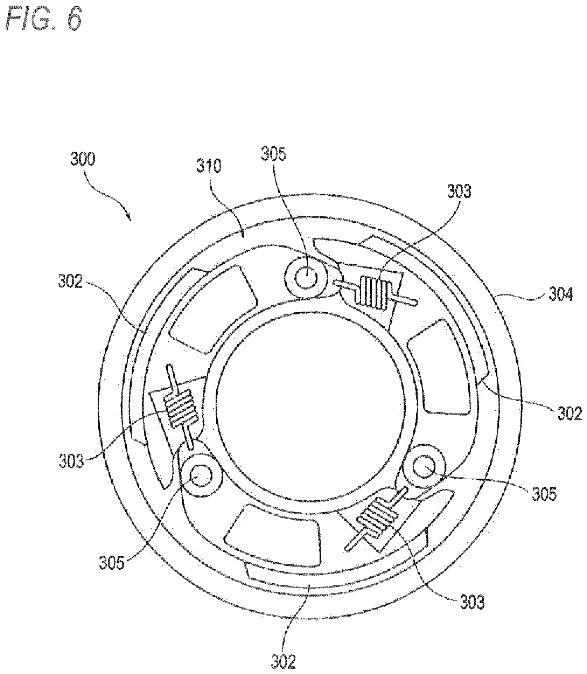

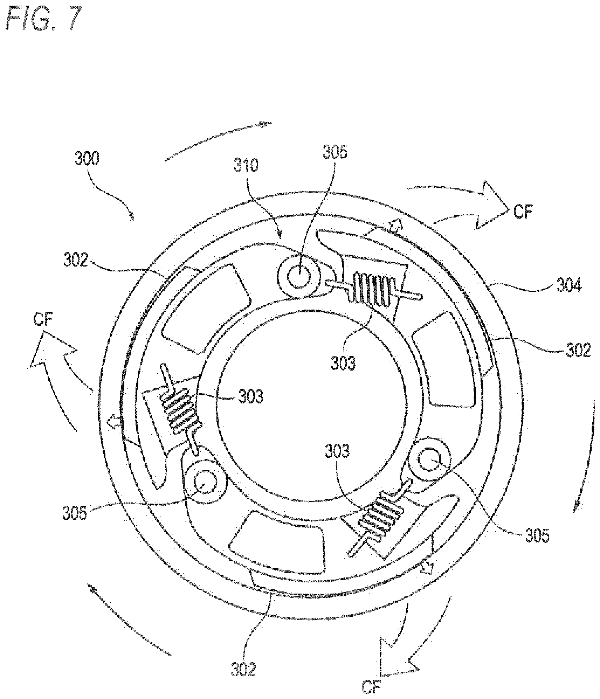

Fig. 5 shows a section of the centrifugal clutch 300 in detail. Fig. 6 shows a state of the centrifugal clutch 300 resulting when the drive source 100 is at a halt. Fig. 7 shows a state of the centrifugal clutch 300 resulting when the straddled vehicle 1 is running.

As shown in Figs, 5 to 7, the centrifugal clutch 300 includes a clutch plate 301, clutch shoes 302, clutch springs 303, and a clutch housing 304 (a clutch outer).

As shown in Fig. 5, the clutch plate 301 is attached fixedly to the secondary shaft 12 of the secondary sheave 14 of the transmission 200. Pins 305 are provided on the clutch plate 30. The clutch shoes 302 are assembled to the centrifugal clutch 300 with the pins 305. In the exemplary construction shown in Fig. 6, three pins 305 are mounted at equal intervals in a circumferential direction. As shown in Fig. 6, one end of the clutch shoe 302 is attached rotatably to the pin 305 which is attached to the clutch plate 301. The clutch springs 303 are assembled so as to connect one end of the clutch shoe 302 to the other end of the circumferentially adjacent clutch shoe 302. The clutch springs 303 normally exhibit elastic reaction force which draws the one end of the clutch shoe 302 and the other end of the circumferentially adjacent clutch shoe 302 to each other. The clutch housing 304 is a cup-like member and is mounted on the gear shaft 401 which passes through the hollow secondary shaft 12 of the secondary sheave 14 while being disposed so as to cover an assembly 310 of the clutch shoes 302.

When the drive source 100 is at a halt, as shown in Fig. 6, the assembly 310 of the clutch shoes 302 is contracted in diameter as a whole by means of the elastic reaction force of the clutch springs 303. Due to this, the clutch shoes 302 are not in contact with the clutch housing 304.

As the drive source 100 starts rotating, the secondary sheave 14 starts rotating. As a rotation speed of the secondary sheave 14 increases gradually, as shown in Fig. 7, by means of the centrifugal force CF generated, the assembly 310 of the clutch shoes 302 starts expanding in diameter as a whole against the elastic reaction force of the clutch springs 303. As a result, when the secondary sheave 14 reaches a certain rotation speed, the clutch shoes 302 are brought into contact with the clutch housing 304. Then, a half-engaged state is generated in which torque is transmitted while the clutch shoes 302 are sliding on the clutch housing 304. Then, the clutch shoes 302 are brought into contact with the clutch housing 304 by means of friction force applied therebetween. As a result, torque according to the friction force applied between the clutch shoes 302 and the clutch housing 304 is transmitted to the gear shaft 401. A centrifugal clutch like the centrifugal clutch 300 is disclosed in, for example, document JP-A-2006-71096.

As can be understood from the above, in the centrifugal clutch 300, the centrifugal clutch 300 is engaged and disengaged as the clutch shoes 302 are connected to and disconnected from the clutch housing 304. When paying attention to this structural role, the centrifugal clutch 300 can be divided briefly into a centrifugal clutch upstream path 10a (refer to Fig. 9) which is defined as a path from the drive source 100 to the clutch shoes 302 and to which driving force of the drive source 100 is transmitted and a centrifugal clutch downstream path 10b (refer to Fig. 9) which is defined as a path from the clutch housing 304 to the driving wheel 9.

Fig. 9 shows a schematic construction of the power unit 10 as viewed from the top thereof.

As shown in Fig. 9, the construction of the centrifugal clutch 300 can be divided into the centrifugal clutch upstream member 300a and the centrifugal clutch downstream member 300b.

The centrifugal clutch upstream member 300a is, for example, a member that includes the clutch plate 301 and the clutch shoes 302. The centrifugal clutch upstream member 300a is connected mechanically to the drive source 100 and rotates as the drive source 100 rotates. In other words, the centrifugal clutch upstream member 300a is structurally connected to the drive source 100 and rotates as the drive source 100 rotates. The centrifugal clutch upstream member 300a is also at a halt when the drive source 100 is at a halt. As a result of the rotation of the centrifugal clutch upstream member 300a, centrifugal force whose magnitude corresponds to the magnitude of a rotation speed the centrifugal clutch upstream member 300a is applied to the centrifugal clutch upstream member 300a. This centrifugal force increases a rotation radius of the movable member provided on the centrifugal clutch upstream member 300a, as a result of which the centrifugal clutch upstream member 300a is brought into contact with the centrifugal clutch downstream member 300b and is mechanically connected thereto at last.

The centrifugal clutch downstream member 300b is, for example, a member that includes the clutch housing 304. The centrifugal clutch downstream member 300b is mechanically connected to the driving wheel 9. In other words, the centrifugal clutch downstream member 300b is structurally connected to the driving wheel 9, and the driving wheel 9 rotates as the centrifugal clutch downstream member 300b rotates. The centrifugal clutch downstream member 300b is mechanically connected to or disconnected from the centrifugal clutch upstream member 300a according to the magnitude of centrifugal force which is generated in response to the rotation of the drive source 100. In such a state that the centrifugal clutch downstream member 300b is in mechanical contact with the centrifugal clutch upstream member 300a, the centrifugal clutch downstream member 300b rotates in association with the rotation of the drive source 100. In such a state that the centrifugal clutch downstream member 300b is mechanically disconnected from the centrifugal clutch upstream member 300a, the centrifugal clutch downstream member 300b rotates at a rotation speed which is not essentially related to the rotation speed of the drive source 100 or stays stationary even when the drive source 100 is rotating.

The centrifugal clutch upstream member 300a and the centrifugal clutch downstream member 300b are mechanically connected together or disconnected from each other according to the magnitude of centrifugal force generated according to a rotation speed of the drive source 100 which is applied to the centrifugal clutch upstream member 300a, whereby a transmission of driving force from the centrifugal clutch upstream member 300a to the centrifugal clutch downstream member 300b is made or cut off. In other words, the centrifugal clutch upstream member 300a and the centrifugal clutch downstream member 300b are brought into contact with each other to be connected together or are disconnected from each other according to the magnitude of the centrifugal force to make or cut off the transmission of the driving force there between.

The "mechanical connection" means that the centrifugal clutch upstream member 300a and the centrifugal clutch downstream member 300b are structurally connected together so that power generated by the drive source 100 is transmitted. On the other hand, the "mechanical disconnection" means that the centrifugal clutch upstream member 300a and the centrifugal clutch downstream member 300b are structurally disconnected from each other so that power generated by the drive source 100 is not transmitted.

In this description, the path including the drive source 100, the transmission 200, the centrifugal clutch upstream member 300a and the driving force transmission mechanisms which connect these elements mechanically is referred to as the centrifugal clutch upstream path 10a. Namely, in the driving force transmission path which transmits driving force generated by the drive source 100 to the driving wheel 9, the centrifugal clutch upstream path 10a is defined as the path from the drive source 100 to the centrifugal clutch upstream member 300a. Driving force generated by the drive source 100 is transmitted to the centrifugal clutch upstream path 10a at all times. The centrifugal clutch upstream path 10a rotates as the drive source 100 rotates and comes to a halt as the drive source 100 comes to a halt. Namely, the centrifugal clutch upstream path 10a rotates together with the drive source 100.

The path that connects mechanically the centrifugal clutch downstream member 300b, the driving wheel 9 and the driving force transmission mechanisms which mechanically connect these elements together is referred to as the centrifugal clutch downstream path 10b. In the driving force transmission path which transmits driving force generated by the drive source 100 to the driving wheel 9, the centrifugal clutch downstream path 10b is defined as the path from the centrifugal clutch downstream member 300b to the driving wheel 9. The centrifugal clutch downstream path 10b transmits the driving force transmitted from the drive source 100 to the driving wheel 9 to drive the straddled vehicle 1. The elements of the centrifugal clutch downstream path 10b rotate together with the drive source 100 on one occasion and rotate separately from the drive source 100 or stay stationary on the other occasion. In other words, the centrifugal clutch downstream path 10b transmits or does not transmit power that is similar to or different from that transmitted by the centrifugal clutch upstream path 10a according to the situation of the centrifugal clutch 300.

The term "rotation speed of the centrifugal clutch upstream path" means a rotation speed at a predetermined point along the centrifugal clutch upstream flow path 10a, and is, for example, a rotation speed of the driving source 100. The "rotation speed of the centrifugal clutch downstream path" means a rotation speed at a predetermined point along the centrifugal clutch downstream flow path 10b, and is, for example, a rotation speed of the driving wheel 9.

In this description, a state where the centrifugal clutch upper member 300a (for example, the clutch shoes 2) and the centrifugal clutch downstream member 300b (for example, the clutch housing 304) are mechanically disconnected from each other whereby no torque is transmitted between the centrifugal clutch upstream member 300a and the centrifugal clutch downstream member 300b is referred to as a disengaged state. On the other hand, a state where torque is transmitted between the centrifugal clutch upstream member 300a (for example, the clutch shoes 302) and the centrifugal clutch downstream member 300b (for example, the clutch housing 304) while the centrifugal clutch upstream member 300a and the centrifugal clutch downstream member 300b are sliding relatively is referred to as a half-engaged state. In addition, a state where the centrifugal clutch upper member 300a (for example, the clutch shoes 302) and the centrifugal clutch downstream member 300b (for example, the clutch housing 304) are mechanically connected together whereby torque is transmitted between the centrifugal clutch upstream member 300a and the centrifugal clutch downstream member 300b is referred to as an engaged state. The engaged state includes a case where the rotation speed of the centrifugal clutch upstream member 300a does not coincide with the rotation speed of the centrifugal clutch downstream member 300b.

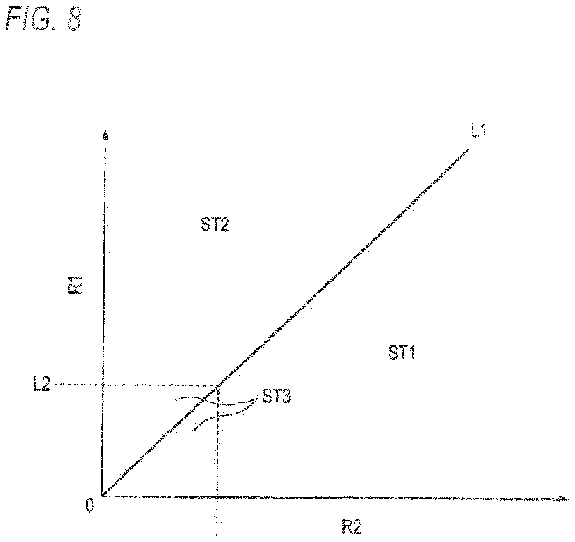

A disengaged state ST3, a half-engaged state ST2 and an engaged state ST1 are related, for example, to a Low gear ratio L1 of the transmission 200, a rotation speed R1 of the centrifugal clutch upstream path and a rotation speed R2 of the centrifugal clutch downstream path, as shown in Fig. 8. As with Fig. 8, in drawings from Fig. 9 onward, "RI" means a rotation speed of the centrifugal clutch upstream path, and "R2" means a rotation speed of the centrifugal clutch downstream path.

The above-described power transmission mechanism can include one or more gears and one or more rotation shafts, for example.

In this description, the centrifugal clutch 300 is described as having the clutch shoes. However, the centrifugal clutch is not limited to a centrifugal clutch with clutch shoes. For example, a centrifugal multi-plate clutch is one of examples of centrifugal clutches.

In a centrifugal multi-plate clutch, a multiplicity of clutch plates are connected together or disconnected from one another according to a rotation speed of the centrifugal clutch upstream member 300a.

In the centrifugal multi-plate clutch, a plurality of drive plates rotating together with the crankshaft in which the rotation of the drive source 100 is transmitted is provided. A plurality of pressure plates is provided in positions opposite to the drive plates in an axial direction. Further, the centrifugal multi-plate clutch has a clutch weight which moves in a direction in which it moves away from a center of the centrifugal multi-plate clutch according to a rotation speed of the drive source 100 so as to connect the drive plates and the pressure plates together or disconnect them from each other. A period of time during which the drive plates are separated from the pressure plates corresponds to a state where the clutch is disengaged. When a rotation speed of the drive source 100 exceeds a predetermined rotation speed, the clutch weight moves in the direction in which it moves away from the center of the centrifugal multi-plate clutch, whereby the drive plates move towards the pressure plates. As a result, a rotation of the drive plates is transmitted to the pressure plates, thereby realizing a state where the clutch is engaged. This transmits the power of the drive source 100 to the driving wheel 9.

It can also be considered that the centrifugal multi-plate clutch is divided into the centrifugal clutch upstream member 300a and the centrifugal clutch downstream member 300b, as shown in Fig. 9. Namely, the drive plates belong to the centrifugal clutch upstream member 300a. On the other hand, the pressure plates belong to the centrifugal clutch downstream member 300b. Thus, when the centrifugal multi-plate clutch is adopted, a system including the drive source 100, the transmission 200, the centrifugal clutch upstream member 300a and the driving force transmission mechanisms which mechanically connect those elements together constitutes the centrifugal clutch upstream path 10a. Similarly, a drive system including the centrifugal clutch downstream member 300b, the driving wheel 9 and the driving force transmission mechanisms which mechanically connect those elements together constitutes the centrifugal clutch downstream path 10b.

<Operations of Centrifugal Clutch>

Here, specific operations of the centrifugal clutch 300 will be described. The centrifugal clutch 300 is structurally characteristic in that it automatically connects or disconnects the power transmission path depending on a running state of the straddled vehicle 1 (for example, a rotating state of the drive source 100).

The centrifugal clutch 300 is configured to make or cut off a transmission of torque between the centrifugal clutch upstream path 10a and the centrifugal clutch downstream path 10b depending on the magnitude of centrifugal force generated according to a rotation speed of the drive source 100. The rider of the straddled vehicle 1 cannot arbitrarily connect and disconnect the power transmission path by controlling the centrifugal clutch 300. This characteristic operation is not present in a clutch which connects and disconnects a transmission path by the rider controlling a clutch lever.

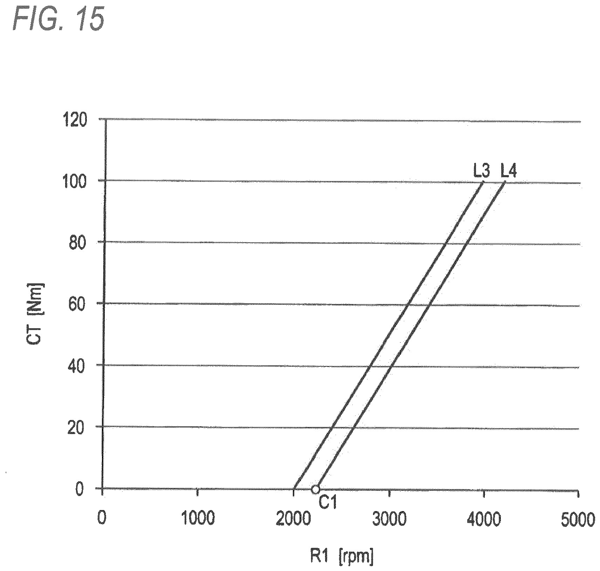

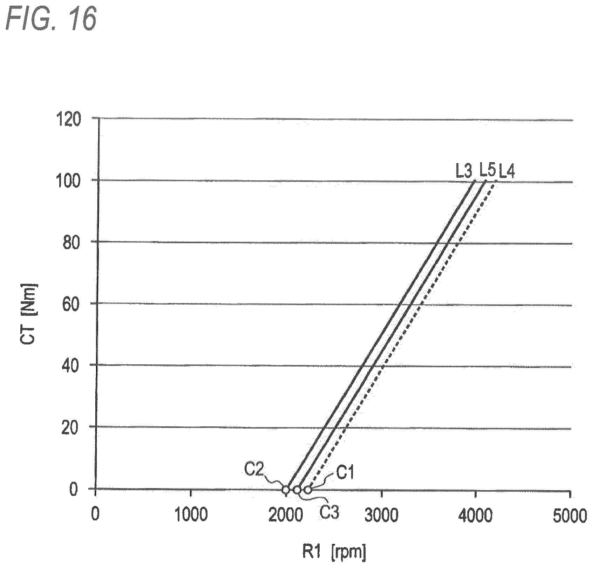

In the straddled vehicle on which the centrifugal clutch is mounted, when the driving force of the driving wheel is controlled, the rider (the riding person) may feel discomfort. Namely, since the straddled vehicle exhibits a behavior which is different from a behavior that the rider intends or expects, the rider feels discomfort. As a result of having made every effort to study about causes of this problem, the inventor of the invention has come to a conclusion that the centrifugal clutch characteristics are changed by the deterioration with age of the centrifugal clutch or a change in the external environments, and the change in the centrifugal clutch characteristics influences the control of the driving force of the driving wheel 9. The centrifugal clutch characteristics means a relationship between the rotation speed R1 of the centrifugal clutch upstream path 10a and a clutch torque capacity CT (refer to Figs. 15, 16 and the like) of the centrifugal clutch 300 in a half-engaged state. The centrifugal clutch 300 has the centrifugal clutch upstream member 300a, which is mechanically connected with the drive source 100 to be rotated and the centrifugal clutch downstream member 300b, which is connected to or disconnected from the centrifugal clutch upstream member 300a by means of centrifugal force generated by the rotation of the centrifugal clutch upstream member 300a. The centrifugal clutch 300 is configured to make or cut off a transmission of torque by centrifugal force generated by the rotation of the centrifugal clutch upstream member 300a between the centrifugal clutch upstream path 10a, which is defined as a path from the drive source 100 to the centrifugal clutch upstream member 300a, and the centrifugal clutch downstream path 10b, which is defined as a path from the centrifugal clutch downstream member 300b to the driving wheel 9. Because of this, in the centrifugal clutch 300, clutch torque to be transmitted to the centrifugal clutch downstream path 10b is determined by centrifugal force generated by the rotation of the centrifugal clutch upstream member 300a rather than by the intention of the rider. Consequently, in case that the centrifugal clutch characteristics are changed, although the rotation speed R1 of the centrifugal clutch upstream path 10a remains the same, different clutch torque is transmitted to the centrifugal clutch downstream path 10b. This is because clutch torque transmitted to the centrifugal clutch downstream path 10b is determined according to the torque capacity CT of the centrifugal clutch in the half-engaged state. Because of this, in case the centrifugal clutch characteristics change greatly, the control of the driving force of the driving wheel 9 is influenced greatly, whereby the rider is caused to feel discomfort easily. To solve the problem, centrifugal clutch characteristics are estimated by a centrifugal clutch characteristics estimation module 601, and centrifugal clutch characteristics stored in a centrifugal clutch characteristics storage module 603 are updated to the centrifugal clutch characteristics estimated by the centrifugal clutch characteristics estimation module 601. Then, an output control module 654 controls the driving force of the driving wheel based on the centrifugal clutch characteristics which are read out from the centrifugal clutch characteristics storage module 603. In this way, since the centrifugal clutch characteristics stored in the centrifugal clutch characteristics storage module 603 are updated to the centrifugal clutch characteristics which are estimated by the centrifugal clutch characteristics estimation module 601, it is possible to restrain the control of the driving force of the driving wheel 9 from being influenced by the change in centrifugal clutch characteristics. Consequently, it is possible to provide the power unit that can reduce the discomfort felt by the rider while the driving force of the driving wheel 9 is being controlled.

Hereinafter, the matters described above will be described in detail.

<Centrifugal Clutch characteristics Updating Process>

Referring to Fig. 10, a centrifugal clutch characteristics updating process executed by the driving force control unit 600 will be described. Fig. 10 is a block diagram showing an example of the driving force control unit 600.

The driving force control unit 600 is configured to mainly execute a driving force control process of controlling the driving force of the driving wheel 9 and a centrifugal clutch characteristics updating process of updating the centrifugal clutch characteristics that are used in the driving force control process. Hereinafter, firstly, the centrifugal clutch characteristics updating process will be described, whereafter the driving force control process will be described.

As shown in Fig. 10, the driving force control unit 600 has the centrifugal clutch characteristics estimation module 601, a centrifugal clutch characteristics updating module 602, and the centrifugal clutch characteristics storage module 603. The driving force control unit 600 has a slip calculation module 651, a target slip calculation module 652 and the output control module 654 (the driving force control module).

Respective functions of the centrifugal clutch characteristics estimation module 601, the centrifugal clutch characteristics updating module 602, the slip calculation module 651, the target slip calculation module 652 and the output control module 654 are realized when the processor such as the CPU reads out computer programs stored, for example, in the ROM to develop them on the RAM and executes the programs.

The driving force control unit 600 may have other functions to control portions of the straddled vehicle 1 than those functions as described above. Additionally, at least a part of the elements of the driving force control unit 600 may be included in a separate control unit other than the driving force control unit 600. The slip calculation module 651, the target slip calculation module 652 and the output control module 654 which are involved in the driving force control process will be described later. Hereinafter, firstly, the centrifugal clutch characteristics estimation module 601, the centrifugal clutch characteristics updating module 602 and the centrifugal clutch characteristics storage module 603, which execute the centrifugal clutch characteristics updating process, will be described.

The centrifugal clutch characteristics estimation module 601 includes a vehicle information storage module 611 which stores vehicle information obtained from the various sensors (for example, the centrifugal clutch downstream rotation sensor 8a, the centrifugal clutch upstream rotation sensor 92, the throttle angle sensor 93).

The centrifugal clutch characteristics estimation module 601 estimates a relationship between a rotation speed R1 of the centrifugal clutch upstream path 10a (hereinafter, referred to as a "rotation speed R1" as required) in a clutch-out state and a clutch torque capacity CT in the clutch-out state based on the vehicle information stored in the vehicle information storage module 611. The clutch-out state means a state where the centrifugal clutch 300 is shifted from an engaged state to a disengaged state. In this description, the "rotation speed R1 of the centrifugal clutch upstream path 10a in the clutch-out state" is not limited to a rotation speed R1 of the centrifugal clutch upstream path 10a at a point in time when the centrifugal clutch 300 is shifted to the clutch-out state and should be a rotation speed R1 of the centrifugal clutch upstream path 10a when the centrifugal clutch 300 is in the clutch-out state. Additionally, in this description, the "clutch torque capacity CT in the clutch-out state" is not limited to a clutch torque capacity CT at a point in time when the centrifugal clutch 300 is shifted to the clutch-out state and should be a clutch torque capacity CT when the centrifugal clutch 300 is in the clutch-out state.

In this embodiment, a first state of the centrifugal clutch 300 while the straddled vehicle 1 is running, is referred to as the clutch-out state. In this embodiment, the centrifugal clutch characteristics estimation module 601 estimates a rotation speed R1 and a clutch torque capacity CT in the clutch-out state.

The centrifugal clutch characteristics estimation module 601 is configured to estimate centrifugal clutch characteristics based on the rotation speed R1 and the clutch torque capacity CT in the clutch-out state. The centrifugal clutch characteristics are characteristics indicating a relationship between a rotation speed R1 and a clutch torque capacity CT when the centrifugal clutch 300 is in the half-engaged state. The centrifugal clutch characteristics change due to variation in production and deterioration with age of the centrifugal clutch 300. The centrifugal clutch characteristics are used in the driving force control process, which will be described later.

The centrifugal clutch characteristics updating module 602 is configured to update the centrifugal clutch characteristics stored in the centrifugal clutch characteristics storage module 603 to the centrifugal clutch characteristics estimated by the centrifugal clutch characteristics estimation module 601.

The centrifugal clutch characteristics storage module 603 is configured to store the centrifugal clutch characteristics.

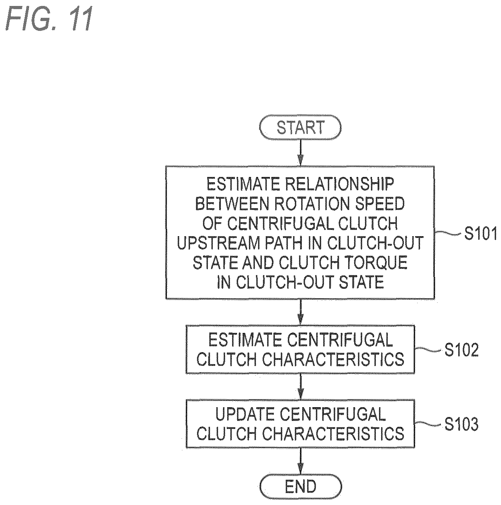

Hereinafter, a flow of the centrifugal clutch characteristics updating process executed by the driving force control unit 600 will be described with reference to Fig. 11. Fig. 11 is a flow shaft showing an example of the centrifugal clutch characteristics updating process.

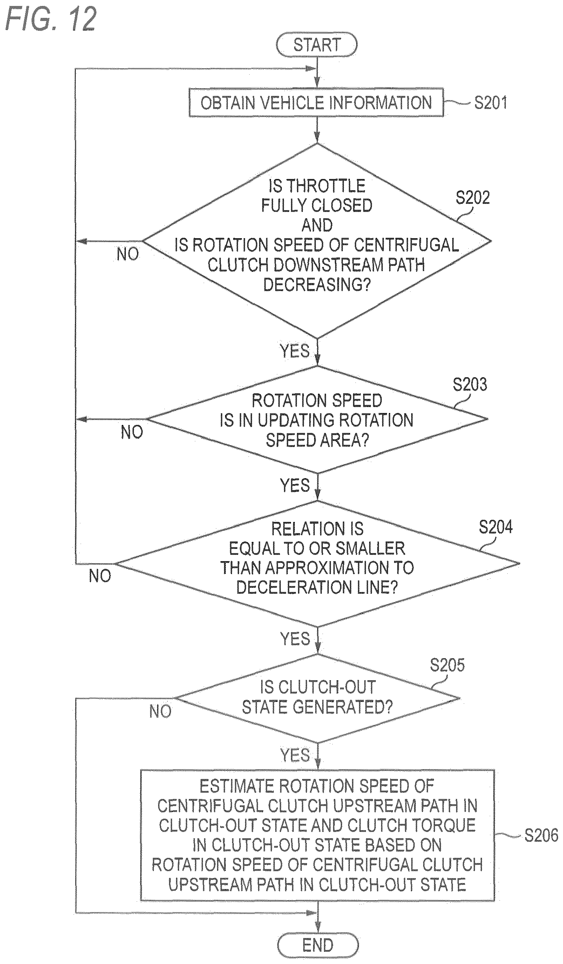

Firstly, the centrifugal clutch characteristics estimation module 601 estimates a relationship between a rotation speed R1 and a clutch torque capacity CT in the clutch-out state (step S101). A specific example of this process will be described later by Figs. 12 to 15.

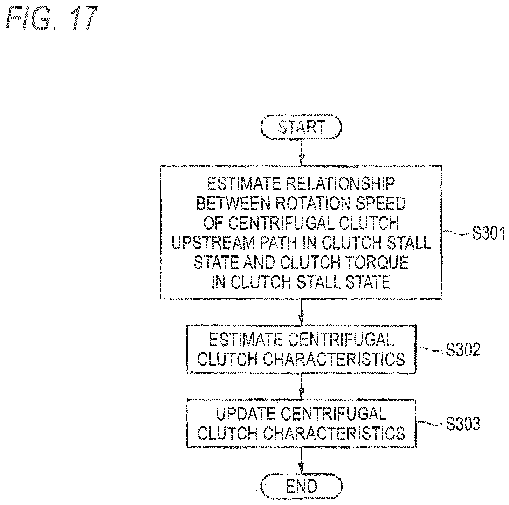

Next, the centrifugal clutch characteristics estimation module 601 estimates centrifugal clutch characteristics based on the rotation speed R1 and the clutch torque capacity CT in the clutch-out state (step S102). A specific example of this process will be described later by Figs. 16, 17.

Next, the centrifugal clutch characteristics updating module 602 updates the centrifugal clutch characteristics stored in the centrifugal clutch characteristics storage module 603 to the centrifugal clutch characteristics estimated by the centrifugal clutch characteristics estimation module 601 (step S103). A specific example of this process will be described later Figs. 16, 17.

Next, examples of the relationship estimation process (the step S101 in Fig. 11) to be executed in the centrifugal clutch characteristics updating process shown in Fig. 11 will be described. The centrifugal clutch characteristics estimation module 601 estimates a rotation speed R1 and a clutch torque capacity CT in the clutch-out state by executing any one of a first example to a third example.

<First Example of Relationship estimation Process>

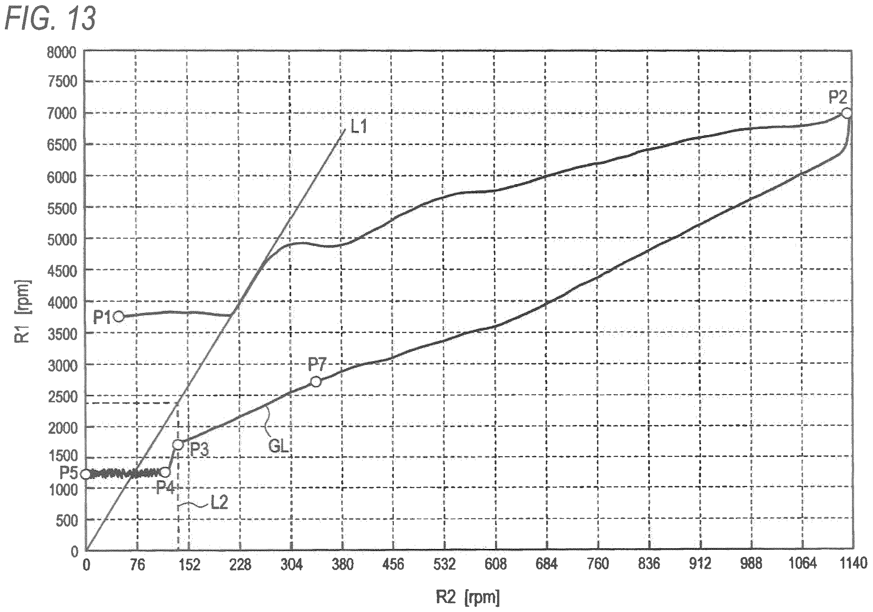

Firstly, referring to Figs. 12, 13, a first example of the relationship estimation process will be described. Fig. 12 is a flow chart showing a first example of the relationship estimation process. Fig. 13 is a graph showing an example of a relationship between a rotation speed R1 of the centrifugal clutch upstream path 10a and a rotation speed R2 (hereinafter, referred to as a "rotation speed R2" as required) of the centrifugal clutch downstream path 10b from a point in time when the straddled vehicle 1 starts running to a point in time when the straddled vehicle 1 stops running.

In Fig. 13, L1 denotes a Low gear ratio of the transmission 200. As with L2 shown in Fig. 8, L2 denotes a range of a disengaged state of the centrifugal clutch 300.

P1 to P4 shown in Fig. 13 will be defined as follows. P1 denotes a point in time when the straddled vehicle 1 starts running from a standstill. P2 denotes a point in time when a throttle angle of the straddled vehicle 1 becomes zero. The throttle is understood to be fully opened during a period of time from P1 to P2. P3 denotes a point in time when the centrifugal clutch 300 is shifted from the engaged state to the disengaged state. The throttle is understood to be fully closed (the throttle angle is zero) during a period of time from P2 to P3. P4 denotes a point in time when the drive source 100 starts idling. P5 denotes a point in time when the straddled vehicle 1 stops running.

In Fig. 13, time elapses from left to right in the figure between P1 and P2 (that is, from P1 towards P2), and between P2 to P5, time elapses from right to left in the figure (that is, from P2 towards P5). Although a curve shown in Fig. 13 varies according to the throttle angle, when the straddled vehicle 1 stops by reducing the throttle angle to zero while the straddled vehicle 1 is running, the curve takes a form similar to a curve between P3 to P5 irrespective of the throttle angle.

In Fig. 12, firstly, the centrifugal clutch characteristics estimation module 601 obtains vehicle information during a predetermined short period of time which enables a determination to be made on whether or not the centrifugal clutch 300 is in the clutch-out state (step S201). The vehicle information is information on the rotation speed R1 detected by the centrifugal clutch upstream rotation detection sensor 92, information on the rotation speed R2 detected by the centrifugal clutch downstream rotation detection sensor 8a, or information on the throttle angle detected by the throttle angle sensor 93. These pieces of information are stored in the vehicle information storage module 611 for use in determination process in step S202 to S205.

Next, the centrifugal clutch characteristics estimation module 601 determines whether or not the throttle is fully closed and the rotation speed R2 is decreased (step S202).

If determining that the throttle is not fully closed and the rotation speed R2 is not decreased (step S202: NO), the centrifugal clutch characteristics estimation module 601 returns to the process in step S201. For example, since the rotation speed R2 is not decreased during the period of time from P1 to P2 in Fig. 13, the flow returns to step S201.

On the other hand, when determining that the throttle is fully closed and the rotation speed R2 is decreased (step S202: YES), the centrifugal clutch characteristics estimation module 601 determines whether or not the rotation speed R2 enters a clutch-out state updating area (step S203). The clutch-out state updating area means a predetermined range of the rotation speed R2, which is, for example, a range of 76 to 228 rpm.

If it determining that the rotation speed R2 does not enter the clutch-out state updating area (step S203: NO), the centrifugal clutch characteristics estimation module 601 returns to the process in step S201.

On the other hand, when determining that the rotation speed R2 enters the clutch-out state updating area (step S203: YES), the centrifugal clutch characteristics estimation module 601 determines whether or not a relationship between a rotation speed on an upstream side of the transmission 200 (for example, a rotation speed of the drive source 100) and a rotation speed on a downstream side of the transmission 200 (for example, a rotation speed of the driving wheel 9) is approximately equal to or smaller than a deceleration line GL (step S204). The deceleration line GL denotes a relationship between a rotation speed on the upstream side of the transmission 200 and a rotation speed on the downstream side of the transmission 200 before the clutch-out state when the throttle is fully closed after the rotation speed R2 is stabilized at a constant throttle angle. For example, in Fig. 13, the deceleration line GL is a line between P7 and P3. The "approximation to the deceleration line GL" means "being smaller than a line which is greater by a predetermined value than the deceleration line GL." For example, the centrifugal clutch characteristics estimation module 601 determines in step S204 whether or not a relationship between a rotation speed on the upstream side of the transmission 200 and a rotation speed on the downstream side of the transmission 200 is equal to or smaller than a line which is 10% higher than the deceleration line GL.

If determining that the relationship between the rotation speed on the upstream side of the transmission 200 and the rotation speed on the downstream side of the transmission 200 is not equal to or smaller than the approximation to the deceleration line GL (step S204: NO), the centrifugal clutch characteristics estimation module 601 returns to the process in step S201.

On the other hand, when determining that the relationship between the rotation speed on the upstream side of the transmission 200 and the rotation speed on the downstream side of the transmission 200 is equal to or smaller than the approximation to the deceleration line GL (step S204: YES), the centrifugal clutch characteristics estimation module 601 determines whether or not a clutch-out state is generated (step S205).

An example of the process in step S205 will be described below. For example, when the rotation speed R2 decreases moderately, the centrifugal clutch characteristics estimation module 601 determines whether or not a deceleration of the rotation speed R1 is equal to or larger than a predetermined value. If determining that the deceleration of the rotation speed R1 is equal to or larger than the predetermined value when the rotation speed R2 decreases moderately, the centrifugal clutch characteristics estimation unit 601 determines that a clutch-out state is generated at a timing just before the deceleration of the rotation speed R1 is equal to or larger than the predetermined value. For example, the rotation speed R2 decreases moderately between P2 and P3 in Fig. 13, and the deceleration of the rotation speed R1 is equal to or larger than the predetermined value between P3 and P4 in Fig. 13. Therefore, the centrifugal clutch characteristics estimation module 601 determines that a clutch-out state is generated at P3 in Fig. 13.

Further, when the rotation speed R2 decreases moderately, the centrifugal clutch characteristics estimation module 601 may determine whether or not the deceleration of the rotation speed R1 is equal to or larger than the predetermined value, where after the drive source 100 starts idling and the rotation speed R1 becomes equal to or smaller than the predetermined value for a certain period of time. When the rotation speed R2 decreases moderately, when determining that the deceleration of the rotation speed R1 is equal to or larger than the predetermined value, where after the drive source 100 starts idling and the rotation speed R1 becomes equal to or smaller than the predetermined value for a certain period of time, the centrifugal clutch characteristics estimation module 601 may determine that a clutch-out state is generated at a timing just before the deceleration of the rotation speed R1 becomes equal to or larger than the predetermined value. For example, the rotation speed R2 decreases moderately between P2 and P3 in Fig. 13, the deceleration of the rotation speed R1 becomes equal to or larger than the predetermined value between P3 and P4 in Fig. 13, whereafter the rotation speed R1 becomes equal to or larger than the predetermined value for a certain period of time between P4 and P5 in Fig. 13. Therefore, the centrifugal clutch characteristics estimation unit 601 determines that a clutch-out state is generated at P3 in Fig. 13.

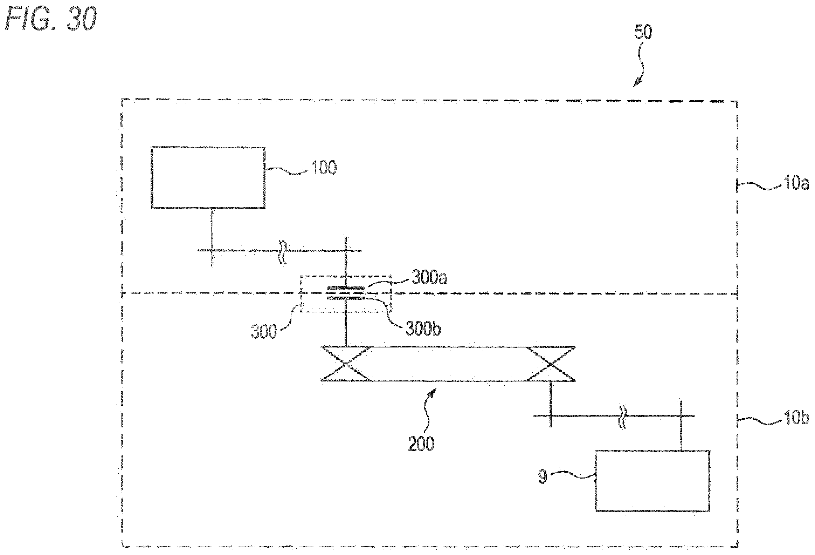

Also, even in case where the transmission 200 is provided downstream of the centrifugal clutch 300 (for example, a configuration shown in Fig. 30), similarly, if determining that the deceleration of the rotation speed R1 is equal to or larger than the predetermined value (for example, between P3 and P4 in Fig. 13), the centrifugal clutch characteristics estimation module 601 may determine that a clutch-out state is generated at a timing just before the deceleration of the rotation speed R1 becomes equal to or larger than the predetermined value (for example, P3 in Fig. 13). Further, for example, when the deceleration of the rotation speed R1 is equal to or larger than the predetermined value (for example, between P3 and P4 in Fig. 13), where after the rotation speed R1 is equal to or smaller than the predetermined value for a certain period of time (for example, between P4 and P5 in Fig. 13), the centrifugal clutch characteristics estimation module 601 may determine that a clutch-out state is generated at a timing just before the deceleration of the rotation speed R1 is equal to or larger than the predetermined value (for example, P3 in Fig. 13).

Next, if the centrifugal clutch characteristics estimation module 601 determines that no clutch-out state is generated (step S205: NO), the flow ends.

On the other hand, if determining that a clutch-out state is generated (step S205: YES), the centrifugal clutch characteristics estimation module 601 estimates a rotation speed R1 and a clutch torque capacity CT in the clutch-out state based on the rotation speed R1 in the clutch-out state (step S206).

Here, an example of the process in step S206 will be described below. The rotation speed R1 in the clutch-out state is not based on a Low gear ratio of the transmission 200 (hereinafter, also, referred to simply as a "Low gear ratio"). Then, the centrifugal clutch characteristics estimation module 601 executes a conversion of the rotation speed R1 based on the Low gear ratio.

As an example, the centrifugal clutch characteristics estimation module 601 estimates a value represented by a rotation speed R1 in the Low gear ratio of the transmission 200 using a rotation speed R2 in the clutch-out state.

As shown in Fig. 13, the centrifugal clutch 300 is disengaged before the gear ratio of the transmission 200 becomes the smallest. The rear ratio of the transmission 200 when the centrifugal clutch 300 is disengaged becomes a value resulting from multiplication of the Low gear ratio of the transmission 200 by a substantially constant coefficient from the configurations of the transmission 200 and the centrifugal clutch 300. This coefficient value is called a mechanical coefficient.

In this case, for example, the centrifugal clutch characteristics estimation module 601 converts the rotation speed R1 by multiplying the rotation speed R1 in the clutch-out state by a predetermined mechanical coefficient. Then, the centrifugal clutch characteristics estimation module 601 determines the converted rotation speed R1 as a rotation speed R1 of the centrifugal clutch upstream path 10a in the clutch-out state which is used in estimation of the centrifugal clutch characteristics.

The centrifugal clutch characteristics estimation module 601 determines the rotation speed R1 in the clutch-out state and determines the clutch torque capacity CT in the clutch-out state as zero.

In this way, the centrifugal clutch characteristics 601 estimates the rotation speed R1 and the clutch torque capacity CT in the clutch-out state.

<Second Example of Relationship estimation Process>

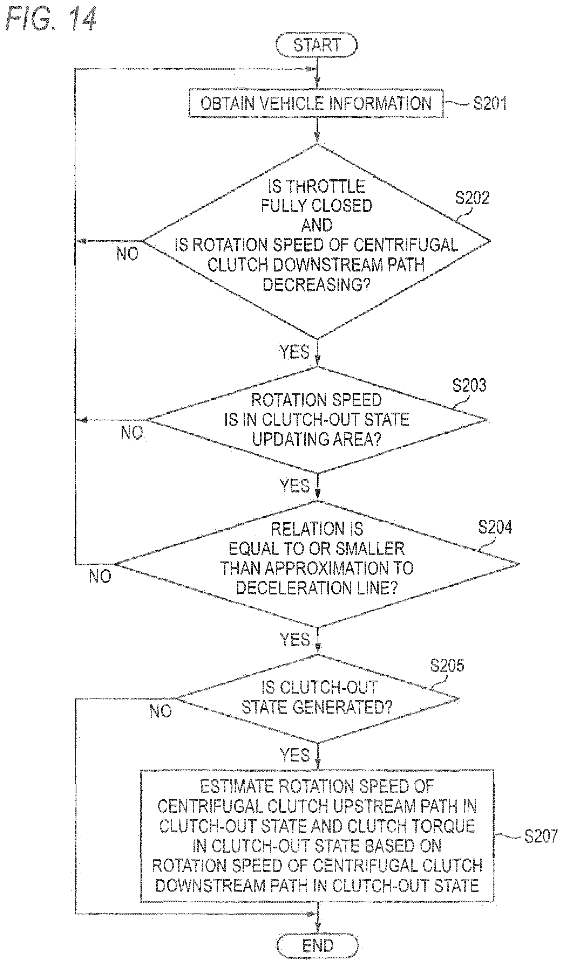

Next, a second example of the relationship estimation process will be described with reference to Fig. 14. Fig. 14 is a flow chart showing a second example of the relationship estimation process.

Steps S201 to S205 are the same as those described in Fig. 12.

If it determining that a clutch-out state is generated (step S205: YES), the centrifugal clutch characteristics estimation module 601 estimates a rotation speed R1 and a clutch torque capacity CT in the clutch-out state based on a rotation speed R2 in the clutch-out state (step S207).

Here, an example of the process in step S207 will be described as below. For example, the centrifugal clutch characteristics estimation module 601 determines a rotation speed R1 in the clutch-out state based on the rotation speed R2 in the clutch-out state and a predetermined Low gear ratio.

For example, in Fig. 13, the centrifugal clutch characteristics estimation module 601 determines a Low gear ratio L1 corresponding to a rotation speed R2 when the centrifugal clutch 300 is at P3 and determines a rotation speed R1 in the clutch-out state based on the determined Low rear ratio L1 and the rotation speed R2.

The centrifugal clutch characteristics estimation module 601 determines a rotation speed R1 in the clutch-out state and determines the clutch torque capacity CT as zero.

In this way, the centrifugal clutch characteristics estimation module 601 estimates the rotation speed R1 and the clutch torque capacity CT in the clutch-out state.

In step S202 in Figs. 12 and 14, it is determined based on the throttle angle detected by the throttle angle sensor 93 whether or not the throttle angle is fully closed. However, the throttle angle may be detected based on a fuel injection amount of the fuel injection unit 640. Alternatively, the determination made in step S202 in Figs. 12 and 14 may be made based on the fuel injection amount of the fuel injection unit 640.

Next, examples of the centrifugal clutch characteristics estimation process (step S102 in Fig. 11) in the centrifugal clutch characteristics updating process shown in Fig. 11 will be described. The centrifugal clutch characteristics estimation module 601 estimates centrifugal clutch characteristics by executing either a first example or a second example below.

<First Example of Centrifugal Clutch characteristics Estimation Process>

Firstly, a first example of the centrifugal clutch characteristics estimation process will be described with reference to Fig. 15. Fig. 15 is a chart showing an example of centrifugal clutch characteristics.

In Fig. 15, L3 denotes centrifugal clutch characteristics before update. L4 denotes centrifugal clutch characteristics after update. CT denotes a clutch torque capacity CT. As with Fig. 15, in drawings from Fig. 16 onward, "CT" means a clutch torque capacity.

The centrifugal clutch characteristics estimation module 601 estimates centrifugal clutch characteristics based on a rotation speed R1 and a clutch torque capacity CT in a clutch-out state by using the first example or the second example of the relationship estimation process described above. For example, in Fig. 15, C1 denotes a point (a coordinate point) indicating a relationship between a rotation speed R1 and a clutch torque capacity CT in a clutch-out state. In this case, the centrifugal clutch characteristics estimation module 601 estimates a line which passes through C1 at the same gradient as a gradient of centrifugal clutch characteristics L3, that is, centrifugal clutch characteristics L4.

In this example, although the gradient of the estimated centrifugal clutch characteristics L4 is described as being the same as the gradient of the centrifugal clutch characteristics L3 which are originally stored, this is only an example.

In this example, although the centrifugal clutch characteristics L3, L4 are described as being straight lines, the centrifugal clutch characteristics L3, L4 may be curves. In this case, for example, a line resulting from translating the centrifugal clutch characteristics L3 to a point C1 may be referred to as the estimated centrifugal clutch characteristics L4.

The centrifugal clutch characteristics updating module 602 updates the centrifugal clutch characteristics L3 stored in the centrifugal clutch characteristics storage module 603 to the centrifugal clutch characteristics L4 estimated by the centrifugal clutch characteristics estimation module 601. In this way, the centrifugal clutch characteristics are updated. The centrifugal clutch characteristics L4 are used in, for example, the driving force control process, which will be described later.

<Second Example of Centrifugal Clutch characteristics Estimation Process>

Next, a second example of the centrifugal clutch characteristics estimation process will be described with reference to Fig. 16. Fig. 16 is a chart showing an example of centrifugal clutch characteristics.

In Fig. 16, L3 denotes centrifugal clutch characteristics before update. L5 denotes centrifugal clutch characteristics after update.

The centrifugal clutch characteristics estimation module 601 estimates centrifugal clutch characteristics based on a rotation speed R1 and a clutch torque capacity CT in a clutch-out state by using the first example or the second example of the relationship estimation process as described above. For example, in Fig. 16, C1 denotes a point indicating a relationship between a rotation speed R1 and a clutch torque capacity CT in a clutch-out state. In addition, for example, in Fig. 16, C2 denotes a point (a coordinate point) indicating a relationship between a rotation speed of the centrifugal clutch upstream path and clutch torque (clutch torque is zero) in the centrifugal clutch characteristics L3. In this case, firstly, the centrifugal clutch characteristics estimation module 601 obtains C3 which is a point indicating an average value between C1 and C2. Next, the centrifugal clutch characteristics estimation module 601 estimates a line which passes through C3 at the same gradient as a gradient of the centrifugal clutch characteristics L3, that is, centrifugal clutch characteristics L5.

In this example, although the gradient of the estimated centrifugal clutch characteristics L5 is described as being the same as the gradient of the centrifugal clutch characteristics L3 which are originally stored, this is only an example.

In this example, although the centrifugal clutch characteristics L3, L5 are described as being straight lines, the centrifugal clutch characteristics L3, L5 may be curves. In this case, for example, a line resulting from translating the centrifugal clutch characteristics L3 to C3 may be referred to as the estimated centrifugal clutch characteristics L5.

The centrifugal clutch characteristics updating module 602 updates the centrifugal clutch characteristics L3 stored in the centrifugal clutch characteristics storage module 603 to the centrifugal clutch characteristics L5 estimated by the centrifugal clutch characteristics estimation module 601. In this way, the centrifugal clutch characteristics are updated. The centrifugal clutch characteristics L5 are used in, for example, the driving force control process, which will be described later.

(Second Embodiment)

Next, a second embodiment will be described.
A straddled vehicle, a power unit, a centrifugal clutch and the like in this embodiment are similar to those of the first embodiment, which have been described with reference to Figs. 1 to 9. Therefore, in the following description, only a centrifugal clutch characteristics updating process which differs from that of the first embodiment will be described.

<Centrifugal Clutch characteristics Updating Process>

Although a driving force control unit 600 according to this embodiment is similar to that of the first embodiment and adopts the configuration shown in Fig 10, a process executed by a centrifugal clutch characteristics estimation module 601 differs from that of the first embodiment.

Namely, in this embodiment, the centrifugal clutch characteristics estimation module 601 estimates a relationship between a rotation speed R1 and a clutch torque capacity CT in a clutch stall state based on vehicle information stored in a vehicle information storage module 611. Then, the centrifugal clutch characteristics estimation module 601 is configured to estimate centrifugal clutch characteristics based on the rotation speed R1 and the clutch torque capacity CT in the clutch stall state.

The clutch stall state means a state of a centrifugal clutch 300 in which when a straddled vehicle 1 is being accelerated with a throttle fully opened, a rotation speed of a centrifugal clutch upstream path is prevented from being increased by causing a slip between the centrifugal clutch upstream member 300a and the centrifugal clutch downstream member 300b, which are shown in Fig. 9. In other words, the clutch stall state means a state of the centrifugal clutch 300 resulting when a rotation speed R1 of a centrifugal clutch upstream path 10a becomes substantially constant for a certain period of time while a rotation speed R2 of a centrifugal clutch downstream path 10b is being increased and the throttle is fully opened. In this description, the "rotation speed R1 of the centrifugal clutch upstream path 10a in the clutch stall state" is not limited to the rotation speed R1 of the centrifugal clutch upstream path 10a when the centrifugal clutch 300 is shifted to the clutch stall state and should be a rotation speed R1 of the centrifugal clutch upstream path 10a when the centrifugal clutch 300 is in the clutch stall state. In addition, the "clutch torque capacity CT in the clutch stall state" is not limited to the clutch torque capacity CT when the centrifugal clutch 300 is shifted to the clutch stall state and should be a clutch torque capacity CT when the centrifugal clutch 300 is in the clutch stall state.

Next, referring to Fig. 17, a flow of a centrifugal clutch characteristics updating process executed by the driving force control unit 600 will be described. Fig. 17 is a flow chart showing an example of a centrifugal clutch characteristics updating process.

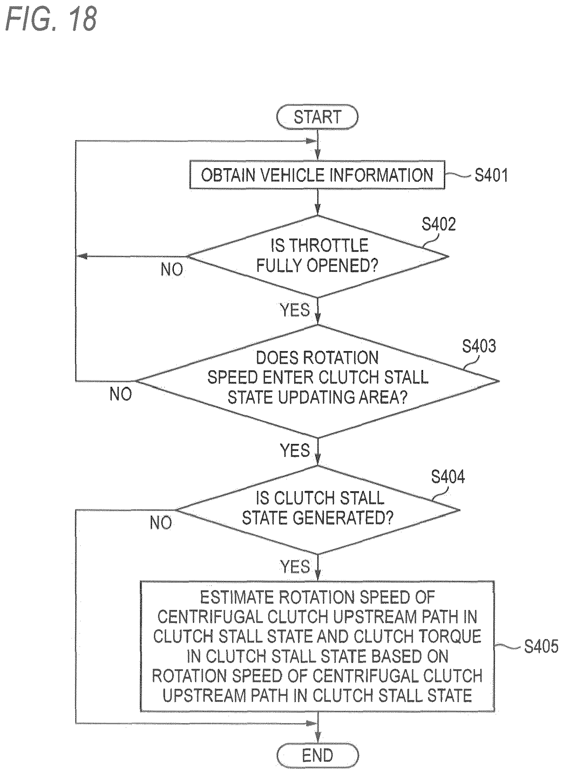

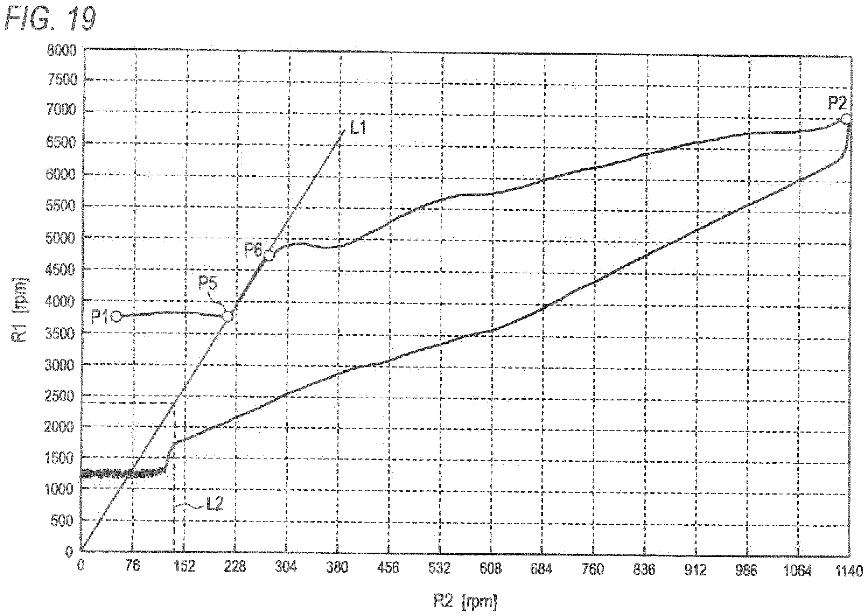

Firstly, the centrifugal clutch characteristics estimation module 601 estimates a rotation speed R1 and a clutch torque capacity CT in the clutch stall state (step S301). A specific example of this process will be described later with reference to Figs. 18, 19.

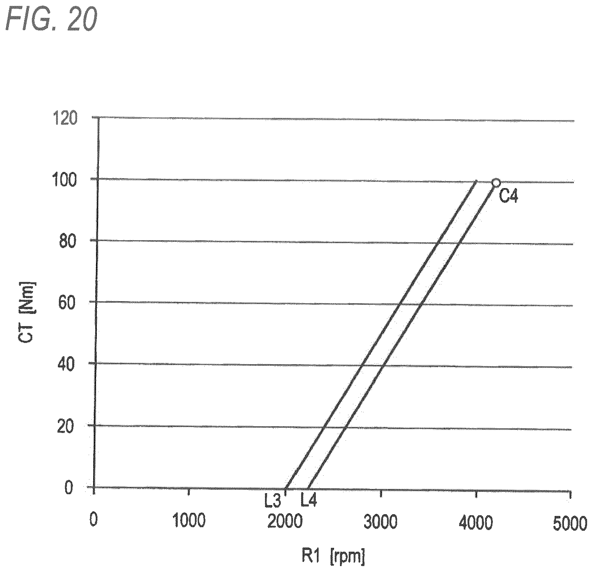

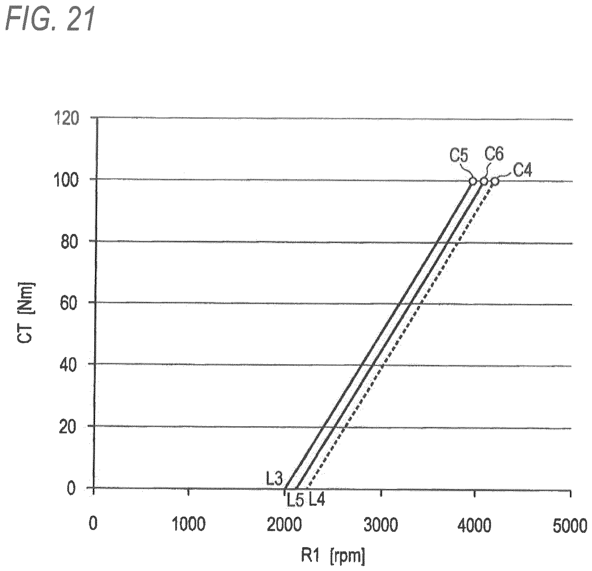

Next, the centrifugal clutch characteristics estimation module 601 estimates centrifugal clutch characteristics based on the rotation speed R1 and the clutch torque capacity CT in the clutch stall state (step S302). A specific example of this process will be described later with reference to Figs. 20, 21.

Next, a centrifugal clutch characteristics updating module 602 updates the centrifugal clutch characteristics stored in a centrifugal clutch characteristics storage module 603 to the centrifugal clutch characteristics estimated by the centrifugal clutch characteristics estimation module 602 (step S303). In this way, the centrifugal clutch characteristics are updated. A specific example of this process will be described later with reference to Figs. 20, 21.

<Example of Relationship estimation Process>

Hereinafter, an example of the relationship estimation process (step S301 in Fig. 17) in the centrifugal clutch characteristics updating process shown in Fig. 17 will be described by reference to Figs. 18, 19. Fig. 18 is a flow chart showing an example of the relationship estimation process. Fig. 19 is a graph showing a relationship between rotation speed R1 and rotation speed R2 from a point in time when the straddled vehicle 1 starts running to a point in time when the straddled vehicle 1 stops running.

In Fig. 19, L1, L2, P1, P2 will be defined in the same manner as done in Fig. 13. In Fig. 19, P5 denotes a point in time when the centrifugal clutch 300 is shifted from a half-engaged state to an engaged state and a point in time when a ratio of the rotation speed R1 to the rotation speed R2 starts increasing according to a Low gear ratio L1.

In Fig 19., it is understood that the centrifugal clutch 300 is in the half-engaged state, the rotation speed R2 is increasing, and the throttle is fully opened just before a time period P1 to P5. P6 denotes a point in time when the increase in the ratio of the rotation speed R1 to the rotation speed R2 according to the Low gear ratio L1 has ended.

In Fig. 18, firstly, the centrifugal clutch characteristics estimation module 601 obtains vehicle information during a predetermined short period which enables a determination to be made on whether or not the centrifugal clutch 300 stalls (step S401). The vehicle information is, for example, information on the rotation speed R1, information on the rotation speed R2 and information on throttle angle detected by a throttle angle sensor 93. These pieces of information are stored in the vehicle information storage module 611 and used for determination process in steps S402 to S404.

Next, the centrifugal clutch characteristics estimation module 601 determines whether or not the throttle is fully opened (step s402).

When determining that the throttle is not fully opened (step S402: NO), the centrifugal clutch characteristics estimation module 601 returns to step S401.

On the other hand, when determining that the throttle is fully opened (step S402: YES), the centrifugal clutch characteristics estimation module 601 proceeds to a determination process in step S403, which will be described later. For example, the centrifugal clutch characteristics estimation module 601 proceeds to step S403 during the time periods P1 to P5 in Fig. 20.

Next, the centrifugal clutch characteristics estimation module 601 determines whether or not the rotation speed R1 enters a clutch stall state updating area (step S403). The clutch stall updating area means a range of the rotation speed R1 over which a clutch stall is generated and is, for example, a range of 3500 to 4000 rpm.

When determining that the rotation speed R1 does not enter the clutch stall state updating area (step S403: NO), the centrifugal clutch characteristics estimation module 601 returns to the process in step S401.

On the other hand, when determining that the rotation speed R1 enters the clutch stall state updating area (step S403: YES), the centrifugal clutch characteristics estimation module 601 proceeds to a determination process in step S404, which will be described later.

Next, the centrifugal clutch characteristics estimation module 601 determines whether or not a clutch stall state is generated (step S404).

Here, an example of the process in step S404 will be described below. For example, the centrifugal clutch characteristics estimation module 601 determines whether or not the rotation speed R2 is increasing and the rotation speed R1 becomes substantially constant for a certain period of time. The term "substantially constant" means that the rotation speed R1 does not change greatly but stays within a predetermined range (for example, the rotation speed R1 does not change over +/- 5%).

If determining that the rotation speed R2 is increasing and that the rotation speed R1 becomes substantially constant for a certain period of time, the centrifugal clutch characteristics estimation module 601 determines that a clutch stall state is generated at a time before the centrifugal clutch 300 is shifted from the half-engaged state to the engaged state. For example, during the time periods P1 to P5 in Fig. 19, the rotation speed R2 is increasing, and the rotation speed R1 becomes substantially constant for a certain period of time, and therefore, the centrifugal clutch characteristics estimation module 601 determines that a clutch stall state is generated before P5 in Fig. 19.

If the centrifugal clutch characteristics estimation module 601 determines that no clutch stall state is generated (step S404: NO), the flow ends.

On the other hand, if determining that a clutch stall state is generated (step S404: YES), the centrifugal clutch characteristics estimation module 601 estimates a rotation speed R1 and a clutch torque capacity CT in the clutch stall state based on the rotation speed R1 in the clutch stall state.

Here, an example of the process in step S405 will be described below. For example, the centrifugal clutch characteristics estimation module 601 determines the rotation speed R1 in the clutch stall state which is detected by a centrifugal clutch upstream rotation detection sensor 92 as the rotation speed R1 in the clutch stall state.

In addition, the centrifugal clutch characteristics estimation module 601 executes a calculation using an expression (1) below based on the rotation speed R1 in the clutch stall state which is detected by the centrifugal clutch upstream rotation detection sensor 92 and a throttle angle in the clutch stall state which is detected by a throttle angle sensor 93 and determines the results of the calculation as the clutch torque capacity CT in the clutch stall state.

[Expression 1]

$$T_{cl}(w^2) = T_{eg}(w, \theta_{th}) - J_{eg} \bullet \dot{w} \quad ....(1)$$

where $T_{cl}(w^2)$: clutch torque capacity CT, $T_{eg}$: torque of drive source 100, w: rotation speed R1 of centrifugal clutch upstream path 10a, $\theta_{th}$: throttle angle, $J_{eg}$: inertial moment of engine, $\dot{w}$: rotation speed.

In this way, the centrifugal clutch characteristics estimation module 601 estimates rotation speed R1 and a clutch torque capacity CT in the clutch stall state.

The following may be adopted as a modified example of step S402 in Fig. 18.

The throttle angle used in the determination in step S402 is not limited to the throttle angle detected by the throttle angle sensor 93 and should be a throttle angle calculated based on a fuel injection amount of a fuel injection unit 640.

Although it is determined in step S402 whether or not the throttle is fully opened, what is determined is not limited to only whether or not the throttle is fully opened, and hence, it may be determined whether or not the throttle angle is constant.

What is determined in step S402 is also not limited to the throttle angle, and hence, a determination may be made on the fuel injection amount of the fuel injection unit 640.

What is determined in step S402 is not limited to only the throttle angle, and hence, a determination may be made on whether or not the torque of the drive source 100 is in the vicinity of a maximum. For example, the centrifugal clutch characteristics estimation module 601 may determine whether or not the torque of the drive source 100 is in the vicinity of a maximum by using a map in which the throttle angle, the rotation speed R1, the ignition timing of an ignition plug 639, and the torque of the drive source 100 are associated with one another. By doing so, the accuracy of the determination is improved by more than a determination made using only the throttle angle. What is determined is not limited to whether or not the torque of the drive source 100 is in the vicinity of a maximum, and hence, it may be determined whether or not the torque of the drive source 100 is constant. Further, in addition to the determinations on whether or not the torque of the drive source 100 is in the vicinity of a maximum and whether or not the torque of the drive source 100 is constant, it may be determined whether or not the throttle is opened fully or the throttle angle is constant. Additionally, the throttle angle in the map may be replaced by the fuel injection amount of the fuel injection unit 640.

In the description above, although the centrifugal clutch characteristics estimation module 601 estimates the rotation speed R1 and the clutch torque capacity CT in the clutch stall state, the state where the rotation speed R1 and the clutch torque capacity CT are estimated is not limited to the clutch stall state. For example, the centrifugal clutch characteristics estimation module 601 may determine that the centrifugal clutch 300 is shifted into a predetermined state in a case where the rotation speed R2 is increasing and the rotation speed R1 becomes substantially constant for a certain period of time when the throttle is opened almost fully and constantly. The centrifugal clutch characteristics estimation module 601 may estimate a rotation speed R1 and a clutch torque capacity CT in the predetermined state. As with the relationship between the rotation speed R1 and the clutch torque capacity CT in the clutch stall state, the rotation speed R1 and the clutch torque capacity CT in the predetermined state are used for the centrifugal clutch characteristics estimation process, which will be described below.

Next, examples of the centrifugal clutch characteristics estimation process (step S302 in Fig. 17) in the centrifugal clutch characteristics updating process shown in Fig. 17 will be described. The centrifugal clutch characteristics estimation module 601 estimates the centrifugal clutch characteristics by executing either a first example or a second example which will be described below.

<First Example of Centrifugal Clutch characteristics Estimation Process>

Firstly, a first example of the centrifugal clutch characteristics estimation process will be described by reference to Fig. 20. Fig. 20 is a chart showing an example of the centrifugal clutch characteristics.

In Fig. 20, L3 denotes centrifugal clutch characteristics before update. L4 denotes centrifugal clutch characteristics after update.

The centrifugal clutch characteristics estimation module 601 estimates centrifugal clutch characteristics based on the rotation speed R1 and the clutch torque capacity CT in the clutch stall state which are estimated through the relationship estimation process as described above. For example, in Fig. 20, C4 denotes a point (a coordinate point) indicating a relationship between the rotation speed R1 and the clutch torque capacity CT in the clutch stall state. In this case, the centrifugal clutch characteristics estimation module 601 estimates a line which passes through C4 at the same gradient as a gradient of centrifugal clutch characteristics L3, that is, centrifugal clutch characteristics L4.

In the example described above, although the gradient of the estimated centrifugal clutch characteristics L4 is described as being the same as the gradient of the centrifugal clutch characteristics L3 which is originally stored, this is only an example.

In the example described above, although the centrifugal clutch characteristics L3, L4 are described as being a straight line, the centrifugal clutch characteristics L3, L4 may be a curve. In this case, for example, a line resulting from translating the centrifugal clutch characteristics L3 to the point C4 which indicates the rotation speed R1 and the clutch torque capacity CT in the clutch stall state may be referred to as the estimated centrifugal clutch characteristics L4.

The centrifugal clutch characteristics updating module 602 updates the centrifugal clutch characteristics L3 stored in the centrifugal clutch characteristics storage module 603 to the centrifugal clutch characteristics L4 estimated by the centrifugal clutch characteristics estimation module 601. The centrifugal clutch characteristics L4 are used in a driving force control process, which will be described later.

<Second Example of Centrifugal Clutch characteristics Estimation Process>

Next, a second example of the centrifugal clutch characteristics estimation process will be described with reference to Fig. 21. Fig. 21 is a chart showing an example of the centrifugal clutch characteristics.

In Fig. 21, L3 denotes centrifugal clutch characteristics before update. L5 denotes centrifugal clutch characteristics after update.

The centrifugal clutch characteristics estimation module 601 estimates centrifugal clutch characteristics based on the rotation speed R1 and the clutch torque capacity CT in the clutch stall state which are estimated through the relationship estimation process as described above. For example, in Fig. 21, C4 denotes a point indicating a relationship between a rotation speed R1 and a clutch torque capacity CT which are estimated in the estimated clutch stall. In addition, in Fig. 21, C5 is a point indicating a relationship between a rotation speed R1 and a clutch torque capacity CT (for example, a value of the clutch torque is 100) in the centrifugal clutch characteristics L3. In this case, firstly, the centrifugal clutch characteristics estimation module 601 obtains C6 which is a point indicating an average value of C4 and C5. Next, the centrifugal clutch characteristics estimation module 601 estimates a line which passes through C6 at the same gradient as a gradient of centrifugal clutch characteristics L3, that is, centrifugal clutch characteristics L5.

In the example as described above, although the gradient of the estimated centrifugal clutch characteristics L5 is described as being the same as the gradient of the centrifugal clutch characteristics L3 which is originally stored, this is only an example.

In the example as described above, although the centrifugal clutch characteristics L3, L5 are described as being a straight line, the centrifugal clutch characteristics L3, L5 may be a curve. In this case, for example, a line resulting from translating the centrifugal clutch characteristics L3 to the point C6 may be referred to as the estimated centrifugal clutch characteristics L5.

The centrifugal clutch characteristics updating module 602 updates the centrifugal clutch characteristics L3 stored in the centrifugal clutch characteristics storage module 603 to the centrifugal clutch characteristics L5 estimated by the centrifugal clutch characteristics estimation module 601. The centrifugal clutch characteristics L5 are used in the driving force control process, which will be described later.

(Third Embodiment)

Next, a third embodiment will be described.

A straddled vehicle, a power unit, a centrifugal clutch and the like in this embodiment are similar to those of the first embodiment, which have been described with reference to Figs. 1 to 9. Therefore, in the following description, only a centrifugal clutch characteristics updating process which differs from that of the first embodiment will be described.

<Centrifugal Clutch characteristics Updating Process>

Although a driving force control unit 600 according to this embodiment is similar to that of the first embodiment and adopts the configuration shown in Fig 10, a process executed by a centrifugal clutch characteristics estimation module 601 differs from that of the first embodiment.

Namely, in this embodiment, the centrifugal clutch characteristics estimation module 601 estimates a rotation speed R1 and a clutch torque capacity CT in the clutch-out state, as well as, a rotation speed R1 and a clutch torque capacity CT in the clutch stall state and estimates centrifugal clutch characteristics based on these estimated rotation speeds and clutch torque capacities.

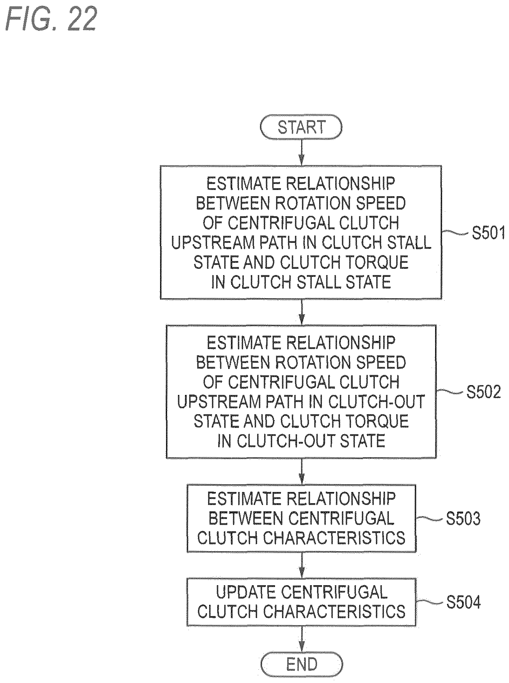

Next, a flow of a centrifugal clutch characteristics updating process executed by the driving force control unit 600 will be described with reference to Fig. 22. Fig. 22 is a flow chart showing an example of the centrifugal clutch characteristics updating process.

Firstly, the centrifugal clutch characteristics estimation module 601 estimates a rotation speed R1 and a clutch torque capacity CT in the clutch stall state (step S501). A specific example of this process is the same as the specific example described in the second embodiment.

Next, the centrifugal clutch characteristics estimation module 601 estimates a rotation speed R1 and a clutch torque capacity CT in the clutch-out state (step S502). A specific example of this process is the same as the specific example described in the first embodiment.

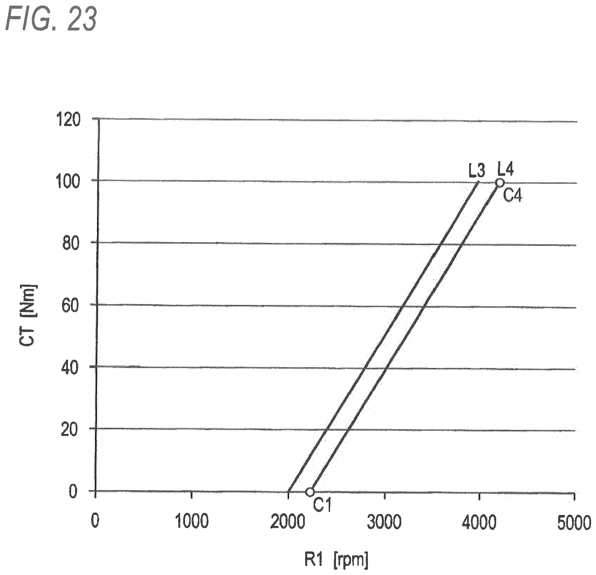

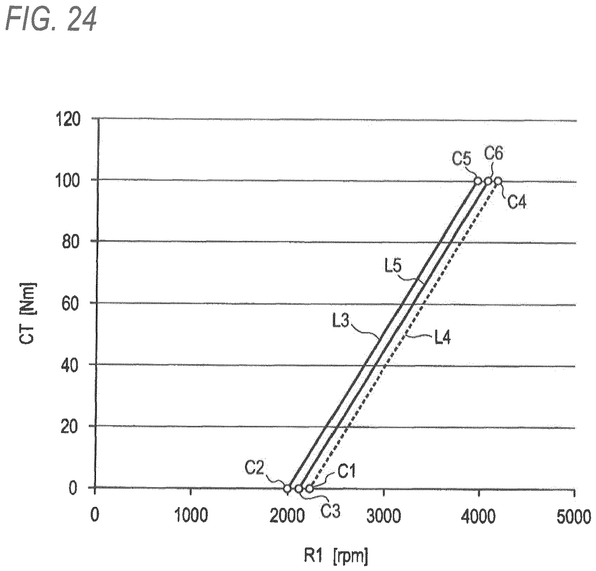

Next, the centrifugal clutch characteristics estimation module 601 estimates centrifugal clutch characteristics based on the rotation speed R1 and the clutch torque capacity CT in the clutch stall state and the rotation speed R1 and the clutch torque capacity CT in the clutch-out state (step S503). A specific example of this process will be described later with reference to Figs. 23, 24.

Next, a centrifugal clutch characteristics updating module 602 updates the centrifugal clutch characteristics stored in a centrifugal clutch characteristics storage module 603 to the centrifugal clutch characteristics estimated by the centrifugal clutch characteristics estimation module 602 (step S504). A specific example of this process will be described later by using Figs. 23 and 24.

In an example shown in Fig. 23, although the centrifugal clutch characteristics estimation module 601 is described as estimating a rotation speed R1 and a clutch torque capacity CT in the clutch-out state after estimating a rotation speed R1 and a clutch torque capacity CT in the clutch stall state, the centrifugal clutch characteristics estimation module 601 may estimate a rotation speed R1 and a clutch torque capacity CT in the clutch stall state after estimating a rotation speed R1 and a clutch torque capacity CT in the clutch-out state.

Next, examples of the centrifugal clutch characteristics estimation process (step S503 in Fig. 22) in the centrifugal clutch characteristics updating process shown in Fig. 22 will be described. The centrifugal clutch characteristics estimation module 601 estimates centrifugal clutch characteristics by executing either a first example or a second example which will be described below.

<First Example of Centrifugal Clutch characteristics Estimation Process>

Firstly, a first example of the centrifugal clutch characteristics estimation process will be described with reference to Fig. 23. Fig. 23 is a chart showing an example of the centrifugal clutch characteristics.

In Fig. 23, L3 denotes centrifugal clutch characteristics before update. L4 denotes centrifugal clutch characteristics after update.

The centrifugal clutch characteristics estimation module 601 estimates centrifugal clutch characteristics based on the rotation speed R1 and the clutch torque capacity CT in the clutch stall state and the rotation speed R1 and the clutch torque capacity CT in the clutch-out state. For example, in Fig. 23, C4 is a point (a coordinate point) indicating a relationship between the rotation speed R1 and the clutch torque capacity CT in the clutch stall state. In addition, for example, in Fig. 23, C1 denotes a point indicating a relationship between the rotation speed R1 and the clutch torque capacity CT in the clutch-out state. In this case, the centrifugal clutch characteristics estimation module 601 estimates a line which passes through C4 and C1 at the same gradient as a gradient of centrifugal clutch characteristics L3, that is, centrifugal clutch characteristics L4.

In the example as described above, although the centrifugal clutch characteristics L3, L4 are described as being a straight line, the centrifugal clutch characteristics L3, L4 may be a curved line. In this case, for example, a line resulting from translating the centrifugal clutch characteristics L3 to the point C1 indicating the relationship between the rotation speed R1 and the clutch torque capacity CT in the clutch-out state and the point C4 indicating the relationship between the rotation speed R1 and the clutch torque capacity CT in the clutch stall state may be referred to as the estimated centrifugal clutch characteristics L4.

The centrifugal clutch characteristics updating module 602 updates the centrifugal clutch characteristics L3 stored in the centrifugal clutch characteristics storage module 603 to the centrifugal clutch characteristics L4 estimated by the centrifugal clutch characteristics estimation module 601. In this way, the centrifugal clutch characteristics are updated. The centrifugal clutch characteristics L4 are used in, for example, the driving force control process, which will be described later.

<Second Example of Centrifugal Clutch characteristics Estimation Process>

Next, a second example of the centrifugal clutch characteristics estimation process will be described by reference to Fig. 24. Fig. 24 is a chart showing an example of centrifugal clutch characteristics.

In Fig. 24, L3 denotes centrifugal clutch characteristics before update. L5 denotes centrifugal clutch characteristics after update.

The centrifugal clutch characteristics estimation module 601 estimates centrifugal clutch characteristics based on the estimated rotation speed R1 and clutch torque capacity CT in the clutch stall state, as well as, the estimated rotation speed R1 and clutch torque capacity CT in the clutch-out state. For example, in Fig. 24, C4 denotes a relationship between the rotation speed R1 and the clutch torque capacity CT in the clutch stall state. Additionally, in Fig. 24, C5 denotes a relationship between the rotation speed R1 and the clutch torque capacity CT (the clutch torque is 100) in the centrifugal clutch characteristics L3. In Fig. 24, C1 denotes a point indicating a relationship between the rotation speed R1 and the clutch torque capacity CT in the clutch-out state. In Fig. 24, C2 denotes a point indicating a relationship between the rotation speed R1 and the clutch torque capacity (the clutch torque is zero) in the centrifugal clutch characteristics L3. In this case, firstly, the centrifugal clutch characteristics estimation module 601 obtains C6 which is a point indicating an average value of C4 and C5. Next, the centrifugal clutch characteristics estimation module 601 obtains C3 which is a point indicating an average value of C1 and C2. Next, the centrifugal clutch characteristics estimation module 601 estimates a line which passes through C6 and C3 at the same gradient as a gradient of the centrifugal clutch characteristics L3, that is, the centrifugal clutch characteristics L5.

In the example described above, although the centrifugal clutch characteristics L3, L5 are described as being a straight line, the centrifugal clutch characteristics L3, L5 may be a curve. In this case, for example, a line resulting from translating the centrifugal clutch characteristics L3 to C3 and C6 may be referred to as the estimated centrifugal clutch characteristics L5.

The centrifugal clutch characteristics updating module 602 updates the centrifugal clutch characteristics L3 stored in the centrifugal clutch characteristics storage module 603 to the centrifugal clutch characteristics L5 estimated by the centrifugal clutch characteristics estimation module 601. The centrifugal clutch characteristics L5 are used in, for example, the driving force control process, which will be described later.

<Example of Driving Force Control Process>

Next, referring to Figs. 10, 25, 26, the driving force control process according to the first to third embodiments will be described.

The driving force control unit 600 shown in Fig. 10 executes the driving force control process to control driving force given to the driving force 9 based on detection signals detected from the various sensors (the centrifugal clutch upstream rotation detection sensor 92, the centrifugal clutch downstream rotation detection sensor 8a, the driven wheel rotation detection sensor 8b, the throttle angle sensor 93) and the centrifugal clutch characteristics updated through the centrifugal clutch characteristics updating process as described above. In the following description, a traction control will be described as an example of the driving force control process.

The traction control is executed by the slip calculation module 651, the target slip calculation module 652 and the output control module 654 in the elements of the driving force control unit 600 as shown in Fig. 10.

The slip calculation module 651 calculates a slip amount of the driving wheel 9 based on a difference between a rotation speed R2 detected by the centrifugal clutch downstream rotation detection sensor 8a and a rotation speed of the driven wheel 7 detected by the driven wheel rotation detection sensor 8b. The slip amount means an amount in which the driving wheel 9 actually slips.

The target slip calculation module 652 calculates a target slip amount based on the rotation speed of the driven wheel 7 detected by the driven wheel rotation detection sensor 8b.

The output control module 654 determines whether or not the slip amount of the driving wheel 9 which is calculated by the slip calculation module 651 is equal to or larger than the target slip amount calculated by the target slip amount calculation module 652. If determining that the slip amount of the driving wheel 9 is smaller than the target slip amount, the output control module 654 executes no traction control. On the other hand, if determining that the slip amount of the driving wheel 9 is equal to or larger than the target slip amount, the output control module 654 starts a control below.

Firstly, the output control module 654 reads out the centrifugal clutch characteristics from the centrifugal clutch characteristics storage module 603. The centrifugal clutch characteristics are the centrifugal clutch characteristics updated through the centrifugal clutch characteristics updating process as described above.

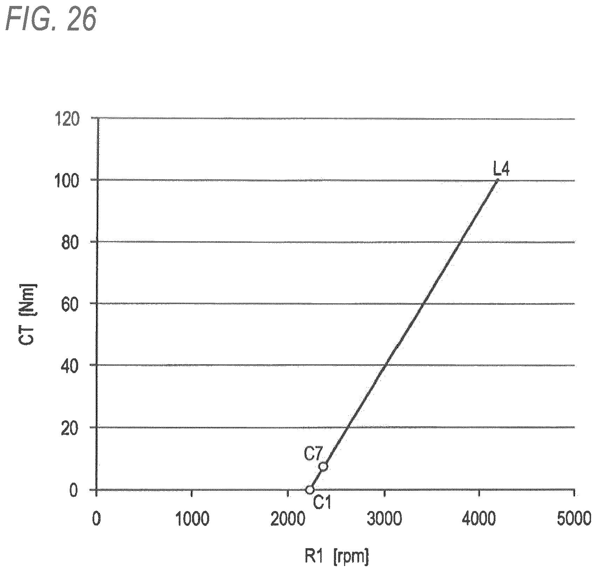

Next, the output control module 654 determines a target rotation speed based on the centrifugal clutch characteristics read out. An example of the target rotation speed will be described later by using Fig. 26.

Next, the output control module 654 controls at least one of, for example, a retarded amount of ignition of the ignition plug 639, a fuel injection amount of the fuel injection unit 640, a throttle angle of the throttle actuator 641 and a brake application amount onto the driving wheel 9 (not shown) to control the output of the drive source 100 so that the rotation speed approaches to the target rotation speed. This can control an amount by which the driving force is controlled.

In executing the control, the output control module 654 may control the driving force more greatly as the slipping amount of the driving force 9 increases more greatly. For example, in a case where the slip amount of the driving force 9 exceeds greatly the target slip amount, the output control module 654 may control the driving force greatly.

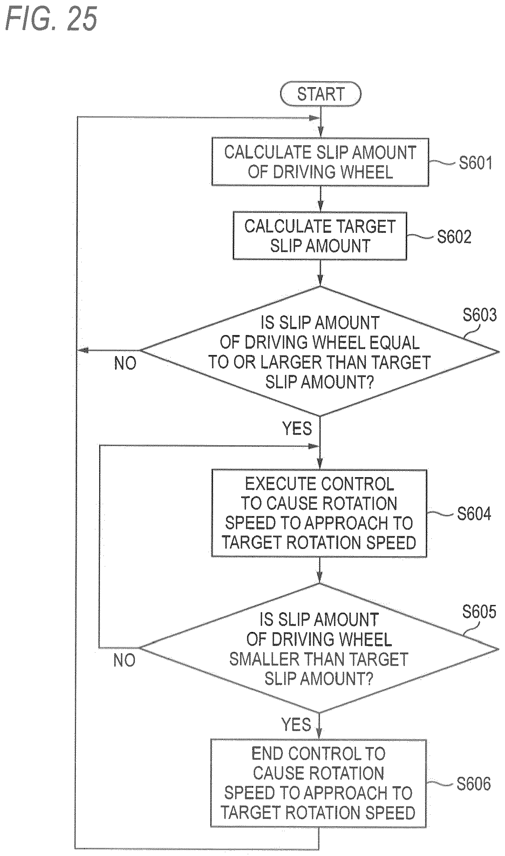

Next, an example of the driving force control process executed by the driving force control unit 600 will be described by reference to Fig. 25. Fig. 25 is a flow chart showing an example of the driving force control process executed by the driving force control unit 600.

Firstly, the slip calculation module 651 calculates a slip amount of the driving wheel 9 based on a difference between the rotation speed R2 detected by the centrifugal clutch downstream rotation detection sensor 8a and the rotation speed of the driven wheel 7 detected by the driven wheel rotation detection sensor 8b (step S601).

Next, the target slip calculation module 652 calculates a target slip amount based on the rotation speed of the driven wheel 7 detected by the driven wheel rotation detection sensor 8b (step S602).

Next, the output control module 654 determines whether or not the slip amount of the driving wheel 9 calculated by the slip calculation module 651 is equal to or larger than the target slip amount calculated by the target slip calculation module 652 (step S603).

If determining that the slip amount of the driving wheel 9 is smaller than the target slip amount (step S603: NO), the output control module 654 does not execute the traction control. In this case, the flow of the process returns to step S601.

On the other hand, if determining that the slip amount of the driving wheel 9 is equal to or larger than the target slip amount (step S603: YES), the output control module 654 executes the control to cause the rotation speed of the centrifugal clutch upstream path (for example, the rotation speed of the drive source 100) to approach to the target rotation speed (step S604). Hereinafter, a specific example of this control will be described.

Firstly, the output control module 654 reads out the centrifugal clutch characteristics from the centrifugal clutch characteristics storage module 603. For example, in a case where the centrifugal clutch characteristics storage module 603 stores centrifugal clutch characteristics L4 shown in Fig. 26, the output control module 654 reads out the centrifugal clutch characteristics L4 from the centrifugal clutch characteristics storage module 603. The centrifugal clutch characteristics L4 are the centrifugal clutch characteristics which are updated through the centrifugal clutch characteristics updating process described above.

Next, the output control module 654 determines a target rotation speed based on the centrifugal clutch characteristics L4 read out from the centrifugal clutch characteristics storage module 603. For example, as shown in Fig. 26, the output control module 654 determines a rotation speed R1 at C7 which is close to C1 where the clutch torque is zero in the centrifugal clutch characteristics L4 as the target rotation speed.

Next, the output control module 654 controls at least one of, for example, the retarded amount of ignition of the ignition plug 639, the fuel injection amount of the fuel injection unit 640, the throttle angle of the throttle actuator 641 and the brake application amount onto the driving wheel 9 to thereby cause the rotation speed R1 to approach to the target rotation speed.

Next, the output control module 654 determines whether or not the slip amount of the driving wheel 9 calculated by the slip calculation module 651 is smaller than the target slip amount calculated by the target slip amount calculation module 652 (step S605).

If determining that the slip amount of the driving wheel 9 is equal to or larger than the target slip amount (step S605: NO), the output control module 654 executes the control in step S604 again. Namely, the flow of the process returns to step S604.

On the other hand, if determining that the slip amount of the driving wheel 9 is smaller than the target slip amount (step S605: YES), the output control module 654 ends the control to cause the rotation speed of the centrifugal clutch upstream path to approach the target rotation speed (step S606). Thereafter, the flow of the process returns to step S601.

Thus, when a slip is generated in the driving wheel 9, the discomfort felt by the rider can be reduced by controlling the slip of the driving wheel 9 based on the updated centrifugal clutch characteristics.

The configuration of the driving force control unit 600 shown in Fig. 10 is exemplary, and the invention is not limited thereto. For example, the control may be executed based on a bank angle. For example, since a permissible slip amount is small when a bank angle is great, a slip amount constituting a threshold may be set small to facilitate the execution of the traction control. In addition, since the permissible slip amount is great when the bank angle is small, the target slip amount constituting the threshold is set so high as to make it difficult to execute the traction control. For example, the straddled vehicle 1 may include an acceleration sensor and a gyroscope so as to detect acceleration and an angular velocity of the straddled vehicle 1, so that the bank angle of the straddled vehicle 1 can be detected based on the acceleration and the angular velocity. As a method for obtaining a bank angle from the acceleration and/or the angular module, the well-known method can be used. Also, the bank angle can be obtained, other parameters besides acceleration and angular velocity may be used for calculation. The slip calculation module 651, the target slip calculation module 652 and the output control module 654 may execute calculations and controls based on the detected bank angle. Additionally, the target slip amount constituting the threshold may be set according the throttle angle.

A slip ratio ((the rotation speed of the centrifugal clutch downstream path - the rotation speed of the driven wheel 7) / the rotation speed of the centrifugal clutch downstream path) and a target slip ratio may be used in place of the slip amount and the target slip amount described above.

The rotation speed R1 that is caused to approach to the target rotation speed in step S604, S606 may be, for example, the rotation speed of the drive source 100 or the rotation speed of an arbitrary element included in the centrifugal clutch upstream path 10a.

In the description described above, although the traction control is described as an example of the driving force control process using the updated centrifugal clutch characteristics, the updated centrifugal clutch characteristics can also be used, for example, for an overshoot suppressing control process in cornering or a posture control process for a straddled vehicle.

(Fourth Embodiment)

Next, a fourth embodiment will be described.

In a conventional straddled vehicle, in controlling the driving force of a driving wheel, a Low gear ratio of a continuously variable transmission is used from time to time in addition to centrifugal clutch characteristics. In addition, the Low gear ratio of the continuously variable transmission is used from time to time in estimating the centrifugal clutch characteristics. However, as is in the case with centrifugal clutch characteristics, it is often the case with continuously variable transmissions that Low gear ratios are not exactly the same due to individual differences or changes as the continuously variable transmissions deteriorate with time. This may cause riders to feel discomfort when the driving force of a driving wheel is controlled. As a result of having made every effort to study about causes of this problem, the inventor of the invention has come to a conclusion that the change in the centrifugal clutch characteristics influences the control of the driving force of the driving wheel. Then, the inventor of the invention has invented the power unit in which the Low gear ratio of the continuously variable transmission is updated and the driving force of the driving wheel is controlled based on the updated Low gear ratio of the continuously variable transmission and the updated centrifugal clutch characteristics.

A straddled vehicle, a power unit, a centrifugal clutch and the like according to this embodiment are the same as those of the first embodiment, which have already been described with reference to Figs. 1 to 9, and therefore, in the following description, only a Low gear ratio updating process which differs from the first embodiment will be described.

<Low Gear Ratio Updating Process>

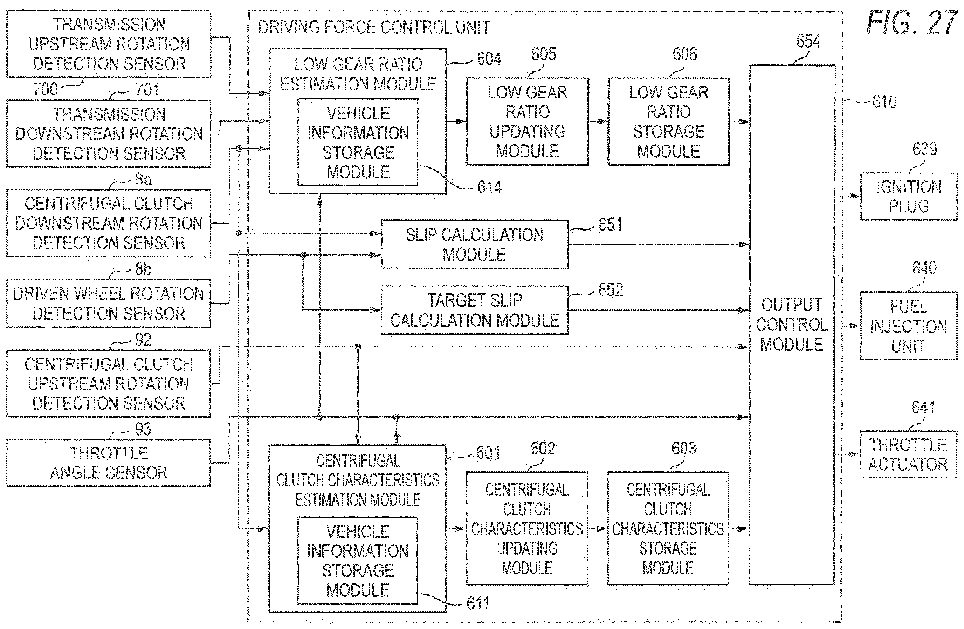

A power unit 10 of the straddled vehicle 1 according to this embodiment includes a driving force control unit 610 shown in Fig. 27 in place of the driving force control unit 600 shown in Figs. 2, 10. Fig. 27 is a block diagram showing an example of the driving force control unit 610.

The driving force control unit 610 executes a Low gear ratio updating process of updating a Low gear ratio of a transmission 200. In addition to the configuration shown in Fig. 10, the driving force control unit 610 includes a Low gear ratio estimation module 604 configured to execute the Low gear ratio updating process, a Low gear ratio updating module 605, and a Low gear ratio storage module 606.

The Low gear ratio estimation module 604 includes a vehicle information storage module 614 configured to store vehicle information obtained from various sensors (for example, a centrifugal clutch downstream rotation detection sensor 8a, a throttle angle sensor 93, a transmission upstream rotation detection sensor 700, a transmission downstream rotation detection sensor 701).

The transmission upstream rotation detection sensor 700 is a sensor for detecting a rotation speed at an upstream side of the transmission 200 (for example, a rotation speed of a drive source 100). The transmission downstream rotation detection sensor 701 is a sensor for detecting a rotation speed at a downstream side of the transmission 200 (for example, a rotation speed of a driving force 9).

In this embodiment, the power unit 10 is configured to include the transmission upstream rotation detection sensor 700 and the transmission downstream rotation detection sensor 701 separately from a centrifugal clutch upstream rotation detection sensor 92 and the centrifugal clutch downstream rotation detection sensor 8a.

However, a configuration may be adopted in which the centrifugal clutch upstream rotation detection sensor 92 detects the rotation speed at the upstream side of the transmission 200 and the centrifugal clutch downstream rotation detection sensor 8a detects the rotation speed at the downstream side of the transmission 200.

In this embodiment, a configuration may be adopted in which the transmission upstream rotation detection sensor 700 detects the rotation speed at the upstream side of the transmission 200 and the centrifugal clutch upstream rotation detection sensor 92 detects the rotation speed at the downstream side of the transmission 200.

In this embodiment, the power unit 10 is configured to include the centrifugal clutch upstream rotation detection sensor 92 and the centrifugal clutch downstream rotation detection sensor 8a. However, the power unit 10 may not include the centrifugal clutch upstream rotation detection sensor 92 and the centrifugal clutch downstream rotation detection sensor 8a as long as the power unit 10 includes the transmission upstream rotation detection sensor 700 and the transmission downstream rotation detection sensor 701.

In this embodiment, the centrifugal clutch upstream rotation detection sensor 92 may detect a rotation speed of the drive source 100, a rotation speed of a predetermined portion along the length of a path from the drive source 100 to the transmission 200 or a rotation speed of an upstream portion (for example, a primary sheave 13) of the transmission 200. The centrifugal clutch downstream rotation detection sensor 8a may detect a rotation speed of a centrifugal clutch downstream member 300b, a rotation speed of a predetermined portion along the length of a path defined from a centrifugal clutch 300 to a driving wheel 9 or a rotation speed of the driving wheel 9. Alternatively, the centrifugal clutch upstream rotation detection sensor 92 may detect a rotation speed of a downstream portion (for example, a secondary sheave 14) of the transmission 200, a rotation speed of a predetermined portion along the length of a path defined from the transmission 200 to the centrifugal clutch or a rotation speed of a centrifugal clutch upstream member 300a. The centrifugal clutch downstream rotation detection sensor 8a may detect a rotation speed of a centrifugal clutch downstream member 300b, a rotation speed of a predetermined portion along the length of a path defined from the centrifugal clutch 300 to the driving wheel 9 or a rotation speed of the driving wheel 9.

In this embodiment, the transmission upstream rotation detection sensor 700 may detect a rotation speed of the drive source 100, a rotation speed of the predetermined portion along the length of the path defined from the drive source 100 to the transmission 200 or a rotation speed of the upstream portion (for example, the primary sheave 13) of the transmission 200. The transmission downstream rotation detection sensor 701 may detect a rotation speed of the centrifugal clutch downstream member 300b, a rotation speed of the predetermined portion along the length of the path defined from the centrifugal clutch 300 to the driving wheel 9 or a rotation speed of the driving wheel 9. Alternatively, the transmission upstream rotation detection sensor 700 may detect a rotation speed of the drive source 100, a rotation speed of the predetermined portion along the length of the path defined from the drive source 100 to the transmission 200 or a rotation speed of the upstream portion (for example, the primary sheave 13) of the transmission 200. The transmission downstream rotation detection sensor 701 may detect a rotation speed of the downstream portion (for example, the secondary sheave 14) of the transmission 200, a rotation speed of the predetermined portion along the length of the path defined from the transmission 200 to the centrifugal clutch 300 or a rotation speed of the centrifugal clutch upstream member 300a.

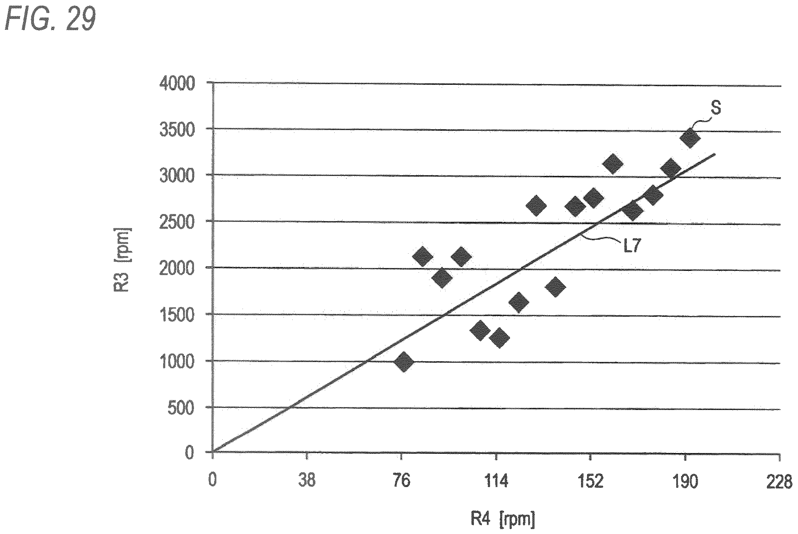

The Low gear ratio estimation module 604 obtains, based on the vehicle information stored in the vehicle information storage module 614, a plurality of samples indicating a relationship between a rotation speed at the upstream side of the transmission 200 and a rotation speed at the downstream side of the transmission 200 for a time period during which a ratio of the rotation speed at the upstream side of the transmission 200 to the rotation speed at the downstream side of the transmission 200 becomes constant. Specific examples of the samples will be described later with reference to Fig. 29.

The Low gear ratio estimation module 604 is configured to estimate the Low gear ratio of the transmission 200 by approximating linearly the obtained samples. For example, the Low gear ratio estimation module 604 may use a straight line which passes through a point where the rotation speed at the upstream side of the transmission 200 and the rotation speed at the downstream side of the transmission 200 both become zero based on the samples in approximating linearly the samples. A specific example of this estimation process will be described later with reference to Fig. 29.

The Low gear ratio updating module 605 is configured to update the Low gear ratio stored in the Low gear ratio storage module 606 to the Low gear ratio estimated by the Low gear ratio estimation module 604. The Low gear ratio storage module 606 is configured to store the Low gear ratio.

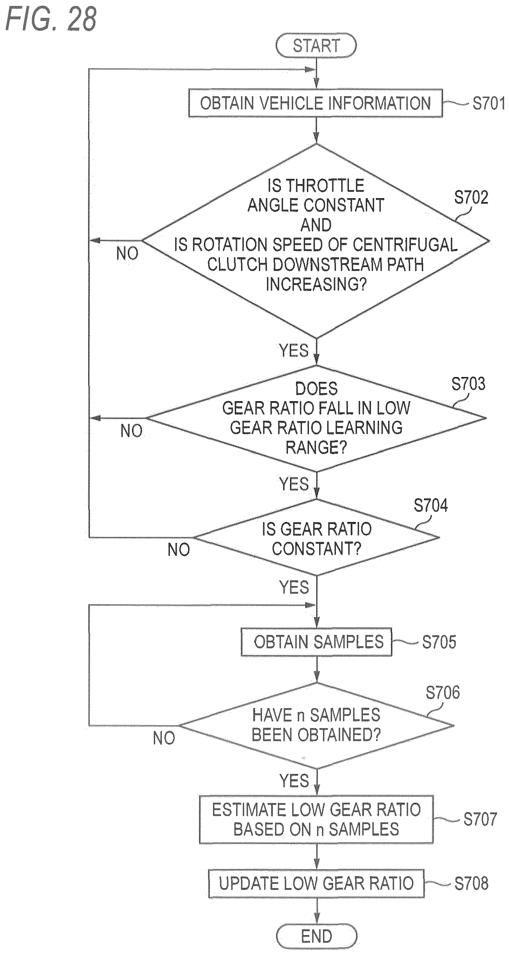

Hereinafter, an example of a Low gear ratio updating process executed by the driving force control unit 600 will be described with reference to Figs. 28 and 29. Fig. 28 is a flow chart showing an example of a Low gear ratio updating process. Fig. 29 is a chart showing an example of a Low gear ratio estimated based on the samples.

Firstly, the Low gear ratio estimation module 604 obtains vehicle information (step S701) when the straddled vehicle 1 starts running from a standstill (for example, P1 onward in Fig. 19). The vehicle information is, for example, information on a rotation speed R2 detected by the centrifugal clutch downstream rotation detection sensor 8a, information on a throttle angle detected by the throttle angle sensor 93, information on a rotation speed at the upstream side of the transmission 200 detected by the transmission upstream rotation detection sensor 700, and information on a rotation speed at the downstream side of the transmission 200 detected by the transmission downstream rotation detection sensor 701. These pieces of information are stored in the vehicle information storage module 614 for use for determinations made in steps S702 to S704, which will be described later.

Next, the Low gear ratio estimation module 604 determines whether or not a throttle angle is constant and the rotation speed R2 is increased (step S702).

If determining that the throttle angle is constant and the rotation speed R2 is not increased (step S702: NO), this process returns to step S701. On the other hand, if it is determined that the throttle angle is constant and the rotation speed R2 is increased (step S702: YES), the process proceeds to step S703. For example, the throttle angle is constant (for example, the throttle is fully opened) and the rotation speed R2 is increasing from P1 to P5 in Fig. 19, and therefore, in this case, the process proceeds to step S703.

Next, the Low gear ratio estimation module 604 determines whether or not a gear ratio of the rotation speed at the upstream side of the transmission 200 to the rotation speed at the downstream side of the transmission 200 enters a Low gear ratio updating range (step S703). The Low gear ratio updating range means a range in which the Low gear ratio (for example, L1 in Fig. 19) is included and from which a gear ratio of a rotation speed at the upstream side of the transmission 200 to a rotation speed at the downstream side of the transmission 200 which cannot be the Low gear ratio is expected to be excluded.

If it is determined that a gear ratio of a rotation speed at the upstream side of the transmission 200 to a rotation speed at the downstream side of the transmission 200 does not fall in the Low gear ratio updating range (step S703: NO), the process returns to step S701. On the other hand, if it is determined that the gear ratio of the rotation speed at the upstream side of the transmission 200 to the rotation speed at the downstream side of the transmission 200 falls in the Low gear ratio updating range (step S703: YES), the process proceed to step S704. For example, from P5 to P6 in Fig. 19, a gear ratio of a rotation speed at the upstream side of the transmission 200 to a rotation speed at the downstream side of the transmission 200 falls in the Low gear ratio updating range, and therefore, in this case, the flow proceeds to step S704.

Next, the Low gear ratio estimation module 604 determines whether or not the rear ratio of the rotation speed at the upstream side of the transmission 200 to the rotation speed at the downstream side of the transmission 200 is constant (step S704).

If it is determined that the rear ratio of the rotation speed at the upstream side of the transmission 200 to the rotation speed at the downstream side of the transmission 200 is not constant (step S704: NO), the process returns to step S701. On the other hand, if it is determined that the rear ratio of the rotation speed at the upstream side of the transmission 200 to the rotation speed at the downstream side of the transmission 200 is constant (step S704: YES), the process proceeds to step S705.

Next, the Low gear ratio estimation module 604 obtains samples indicating a relationship between the rotation speed at the upstream side of the transmission 200 and the rotation speed at the downstream side of the transmission 200 (step S705). A predetermined number of/or n (n is an integral number greater than 1) samples are obtained by the plurality of samples.

Next, the Low gear ratio estimation module 604 determines whether or not n samples are obtained (step S706). If it is determined that n samples are not obtained (step S706: NO), the process returns to step S705. On the other hand, if it is determined that n samples are obtained (step S706: YES), the Low gear ratio estimation module 604 estimates a Low gear ratio of the transmission 200 based on the n samples obtained (step S707).

Here, an example of an estimation process in step S707 will be described with reference to Fig. 29. In Fig. 29, R3 denotes a rotation speed at the upstream side of the transmission 200, and R4 denotes a rotation speed at the downstream side of the transmission 200. As shown in Fig. 29, when samples S are obtained, the Low transmission estimation module 604 approximates linearly the samples S by using a straight line which passes through a point where the rotation speed R3 and the rotation speed R4 are both zero based on the samples S. By doing so, the Low gear ratio estimation module 604 estimates a Low gear ratio L7. The Low gear ratio estimation module 604 may approximate linearly the samples S using a straight line which passes through a point which is slightly out of alignment with the point where the rotation speed R3 and the rotation speed R4 are both zero.

After having estimated the Low gear ratio L7, the Low gear ratio estimation module 604 calculates an average value of the Low gear ratio stored in the Low gear ratio storage module 606 (for example, the Low gear ratio L1 shown in Figs. 13 and 19) and the Low gear ratio L7 and may determine the average value as a finally estimated Low gear ratio.

Next, the Low gear ratio updating module 605 updates the Low gear ratio stored in the Low gear ratio storage module 606 (for example, the Low gear ratio L1 shown in Figs. 13 and 19) to the Low gear ratio (for example, the Low gear ratio L7 shown in Fig. 29) estimated by the Low gear estimation module 604 (step S707). The Low gear ratio of the transmission 200 updated in the way as described above is used for a driving force control process by an output control module 654 together with the centrifugal clutch characteristics.

In this way, according to this embodiment, since the driving force control process can be executed by using the updated Low gear ratio of the transmission 200 in addition to the updated centrifugal clutch characteristics, the discomfort felt by the rider can be further reduced.

Thus, the embodiments of the invention have been described heretofore.

In the embodiments, the invention is described by taking the power unit 10 (refer to Fig. 9) in which the transmission 200 is disposed on the centrifugal clutch upstream path 10a as an example, the invention can also be applied similarly to a power unit 50 in which a transmission 200 is disposed on a centrifugal clutch downstream path 10b, as shown in Fig. 30.

In the embodiments, the driving force control unit 600 includes the centrifugal clutch characteristics estimation module 601, the centrifugal clutch characteristics updating module 602, the centrifugal clutch characteristics storage module 603, the slip calculation module 651, the target slip calculation module 652, and the output control module 654. However, a separate device from the driving force control unit 600 may include some arbitrary ones in those elements. For example, the driving force control unit 600 may be configured to include only the centrifugal clutch characteristics estimation module 601, the centrifugal clutch characteristics updating module 602 and the centrifugal clutch characteristics storage module 603.

In the fourth embodiment, the driving force control unit 610 includes the centrifugal clutch characteristics estimation module 601, the centrifugal clutch characteristics updating module 602, the centrifugal clutch characteristics storage module 603, the Low gear ratio estimation module 604, the Low gear ratio updating module 605, the Low gear ratio storage module 606, the slip calculation module 651, the target slip calculation module 652 and the output control module 654. However, a separate device from the driving force control unit 610 may include some arbitrary ones in those elements. For example, the driving force control unit 610 may include only the Low gear ratio estimation module 604, the Low gear ratio updating module 605, and the Low gear ratio storage module 606.

In the embodiments, the centrifugal clutch upstream rotation detection sensor detects the rotation speed of the drive source as the rotation speed of the centrifugal clutch upstream path and additionally may detect the rotation speed of any one of the elements disposed along the length of the centrifugal clutch upstream path as the rotation speed of the centrifugal clutch upstream path. For example, the centrifugal clutch upstream rotation detection sensor may detect the rotation speed of the centrifugal clutch upstream member, the rotation speed of the primary sheave or the secondary sheave of the transmission, and the rotation speed of the transmission shaft of the transmission as the rotation of the centrifugal clutch upstream path. In addition, in the embodiments, the centrifugal clutch downstream rotation detection sensor detects the rotation speed of the driving wheel as the rotation speed of the centrifugal clutch downstream path and additionally may detect the rotation speed of any one in the elements disposed along the length of the centrifugal clutch downstream path. For example, in case where the transmission is disposed downstream of the centrifugal clutch, the centrifugal clutch downstream rotation detection sensor may detect the rotation speed of the centrifugal clutch downstream member, the rotation speed of the primary sheave or the secondary sheave of the transmission and the rotation speed of the transmission shaft of the transmission as the rotation speed of the centrifugal clutch downstream path.

In the embodiments, the clutch characteristics over the whole range of the half-engaged state are estimated as the centrifugal clutch characteristics. However, the centrifugal clutch characteristics estimation module of the invention should estimate at least a part of the centrifugal clutch characteristics. For example, the centrifugal clutch characteristics estimation module of the invention may estimate only the centrifugal clutch characteristics in the vicinity of the clutch-out state.

In the embodiments, the centrifugal clutch characteristics are estimated based on the rotation speed R1 and the clutch torque capacity CT in the clutch-out state or clutch stall state of the centrifugal clutch. However, the invention is not limited thereto. According to the invention, the centrifugal clutch characteristics should be estimated based on the rotation speed R1 and the clutch torque capacity CT of the centrifugal clutch, and hence, the centrifugal clutch characteristics may be estimated based on the rotation speed R1 and the clutch torque capacity CT in the half-engaged state which is realized in the midst of the centrifugal clutch being shifted from the disengaged state to the engaged state. As this occurs, the first state constitutes the half-engaged state. The first state may be other states such as a clutch-in state. In the first state or the second state, the centrifugal clutch characteristics may be estimated based on one point indicating the relationship between the rotation speed R1 and the clutch torque capacity CT, or the centrifugal clutch characteristics may be estimated based on two or more points indicating the relationship between the rotation speed R1 and the clutch torque capacity CT.

The straddled vehicle of the invention may be a three-wheeled motor vehicle or an ATV. There is a plurality of types of three-wheeled motor vehicles such as one type having one driving wheel and the other type having a plurality of driving wheels. On the other hand, normal ATVs have a plurality of driving wheels. The embodiments that have been described heretofore can be applied to the three-wheeled motor vehicle having one driving wheel as they are. As to the three-wheeled motor vehicle having the plurality of driving wheels and the ATV, the power unit of each of the embodiments can be applied to each driving wheel. In applying the power unit according to the embodiments to other vehicles rather than the straddled vehicle, the power unit of the embodiments may be applied to an ROV (Recreational Off-Highway Vehicle) and a snowmobile. The power unit of the embodiments can be applied to vehicles which incorporate a centrifugal clutch and in which a traction control is executed.

In the embodiments, the straddled vehicle is described as incorporating the continuously variable transmission as the transmission, however, that is only an example. The transmission installed in the straddled vehicle of the invention may be a continuously variable transmission or a transmission having several gear ratios. The continuously variable transmission installed in the straddled vehicle of the invention may be mechanical or electronic. Additionally, in the straddled vehicle of this invention, a transmission having a multiplicity of gear ratios may be provided between the continuously variable transmission and the driving wheel.

In the embodiments, the straddled vehicle is described as including the centrifugal clutch which is disposed downstream of the continuously variable transmission. However, this is only an example, and in the straddled vehicle, the centrifugal clutch may be provided upstream of the continuously variable transmission.

Thus, while the embodiments of the invention have been described heretofore, it should be said that the technical scope of the invention should not be construed to be limited by the embodiments described heretofore. In this way, the technical scope of the invention should be determined based on the scope of inventions claimed for patent under the claims and the scope of equivalents thereof.

**Description of Reference Numerals**

1 straddled vehicle; 2 body frame; 2A headstock; 3 pivot shaft; 4 body cover; 5 front fork; 6 handlebar; 7 driven wheel; 8a centrifugal clutch downstream rotation detection sensor; 8b driven wheel rotation detection sensor; 9 driving wheel; 10, 50 power unit; 10a centrifugal clutch upstream path; 10b centrifugal clutch downstream path; 11 primary shaft; 12 secondary shaft; 13 primary sheave; 14 secondary sheave; 15 V belt; 20 transmission case; 25 kick shaft; 26 crankcase; 27 cylinder; 30 case main body; 31, 41 fixed flange; 32, 42 movable flange; 40 cover; 92 centrifugal clutch upstream rotation detection sensor; 93 throttle angle sensor; 100 drive source; 300 centrifugal clutch; 300a centrifugal clutch upstream member; 300b centrifugal clutch downstream member; 301 clutch plate; 302 clutch shoe; 303 clutch spring; 304 clutch housing; 305 pin; 400 speed reduction gear; 401 gear shaft; 600, 610 driving force control unit; 601 centrifugal clutch characteristics estimation module; 602 centrifugal clutch characteristics updating module; 603 centrifugal clutch characteristics storage module; 604 Low gear ratio estimation module; 605 Low gear ratio updating module; 606 Low gear ratio storage module; 611, 614 vehicle information storage module; 639 ignition plug; 640 fuel injection unit; 641 throttle actuator; 651 slip calculation module; 652 target slip calculation module; 654 output control module; 700 transmission upstream rotation detection sensor; 701 transmission downstream rotation detection sensor; 904 driving wheel axle.

**Claims**

**1.** A power unit (10, 50) to be mounted in a straddled vehicle (1), comprising:

a drive source (100) configured to generate a driving force;
a driving wheel (9) driven by the driving force from the drive source (100);
a transmission (200) provided between the drive source (100) and the driving wheel (9) and configured to change a gear ratio;
a centrifugal clutch (300) comprising: a centrifugal clutch upstream member (300a) that is mechanically connected with the drive source (100) to be rotated; and a centrifugal clutch downstream member (300b) that is connected to or disconnected from the centrifugal clutch upstream member (300a) by a centrifugal force generated by the rotation of the centrifugal clutch upstream member (300a), wherein the centrifugal clutch (300) is configured to make or cut off transmission of a torque between a centrifugal clutch upstream path (10a) and a centrifugal clutch downstream path (10b), by the centrifugal force generated by the rotation of the centrifugal clutch upstream member (300a), the centrifugal clutch upstream path (10a) is defined as a path from the drive source (100) to the centrifugal clutch upstream member (300a), and the centrifugal clutch downstream path (10b) is defined as a path from the centrifugal clutch downstream member (300b) to the driving wheel (9); a centrifugal clutch upstream rotation detection sensor (92) configured to detect a rotation speed (R1) of the centrifugal clutch upstream path (10a);

**characterized by** a centrifugal clutch characteristics storage module (603) configured to store centrifugal clutch characteristics indicating a relationship between rotation speeds (R1) of the centrifugal clutch upstream path (10a) and clutch torque capacities of the centrifugal clutch (300) in a half-engaged state, wherein, in the half-engaged state, a torque is transmitted between the centrifugal clutch upstream member (300a) and the centrifugal clutch downstream member (300b) by the centrifugal clutch upstream member (300a) sliding relative to the centrifugal clutch downstream member (300b); a centrifugal clutch characteristics estimation module (601) configured to estimate the centrifugal clutch characteristics based on a rotation speed (R1) of the centrifugal clutch upstream path (10a);

a centrifugal clutch characteristics updating module (602) configured to update the centrifugal clutch characteristics stored in the centrifugal clutch characteristics storage module (603) to the centrifugal clutch characteristics that are estimated by the centrifugal clutch characteristics estimation module (601); and

a driving force control module (654) configured to control a driving force of the driving wheel (9) based on the centrifugal clutch characteristics that are read out from the centrifugal clutch characteristics storage module (603).

2. The power unit (10, 50) according to Claim 1, wherein the centrifugal clutch characteristics estimation module (601) is configured to estimate the centrifugal clutch characteristics based on a rotation speed (R1) of the centrifugal clutch upstream path (10a) and a clutch torque capacity (CT) in a first state of the centrifugal clutch (300) while the straddled vehicle (1) is running.

3. The power unit (10, 50) according to Claim 1, wherein the centrifugal clutch characteristics estimation module (601) is configured to estimate the centrifugal clutch characteristics based on a rotation speed (R1) of the centrifugal clutch upstream path (10a) and a clutch torque capacity (CT) in a first state of the centrifugal clutch (300) while the straddled vehicle (1) is running, and a rotation speed (R1) of the centrifugal clutch upstream path (10a) and a clutch torque capacity (CT) in a second state of the centrifugal clutch (300) that differs from the first state while the straddled vehicle (1) is running.

4. The power unit (10, 50) according to Claim 2 or 3, wherein the centrifugal clutch characteristics estimation module (601) is configured to estimate the centrifugal clutch characteristics based on a rotation speed (R1) of the centrifugal clutch upstream path (10a) and a clutch torque capacity (CT) in a clutch-out state where the centrifugal clutch (300) is switched from an engaged state to a disengaged state.

5. The power unit (10, 50) according to Claim 4, further comprising:

a centrifugal clutch downstream rotation detection sensor (8a) configured to detect a rotation speed (R2) of the centrifugal clutch downstream path (10b), wherein the centrifugal clutch characteristics estimation module (601) is configured to determine whether or not the centrifugal clutch (300) is in the clutch-out state based on a rotation speed (R1) of the centrifugal clutch upstream path (10a) and a rotation speed (R2) of the centrifugal clutch downstream path (10b).

6. The power unit (10, 50) according to Claim 5, wherein the centrifugal clutch characteristics estimation module (601) is configured to determine that the centrifugal clutch (300) is in the clutch-out state when a deceleration of the rotation speed (R1) of the centrifugal clutch upstream path (10a) is equal to or larger than a predetermined value.

7. The power unit (10, 50) according to Claim 6, wherein the centrifugal clutch characteristics estimation module (601) is configured to determine that the centrifugal clutch (300) is in the clutch-out state when a deceleration of the rotation speed (R1) of the centrifugal clutch upstream path (10a) is equal to or larger than a predetermined value and the rotation speed (R1) of the centrifugal clutch upstream path (10a) is equal to or smaller than a predetermined value.

8. The power unit (10, 50) according to any one of Claims 4 to 7, wherein the centrifugal clutch characteristics estimation module (601) is configured to obtain the rotation speed (R1) of the centrifugal clutch upstream path (10a) and the clutch torque capacity (CT) in the clutch-out state by multiplying the rotation speed (R1) of the centrifugal clutch upstream path (10a) by a predetermined coefficient.

9. The power unit (10, 50) according to any one of Claims 4 to 7, further comprising:

a centrifugal clutch downstream rotation detection sensor (8a) configured to detect a rotation speed (R2) of the centrifugal clutch downstream path (10b), wherein the transmission (200) is a continuously variable transmission (CVT) for changing gear ratios continuously in a step-less manner, the centrifugal clutch (300) is provided on a path between the transmission (200) and the driving wheel (9), and the centrifugal clutch characteristics estimation module (601) is configured to obtain a relationship between the rotation speed (R1) of the centrifugal clutch upstream path (10a) and the clutch torque capacity (CT) in the clutch-out state based on a rotation speed (R2) of the centrifugal clutch downstream path (10b) and a Low gear ratio of the transmission (200).

10. The power unit (10, 50) according to Claim 2 or 3, further comprising:

a centrifugal clutch downstream rotation detection sensor (8a) configured to detect a rotation speed (R2) of the centrifugal clutch downstream path (10b),

wherein the centrifugal clutch characteristics estimation module (601) is configured to estimate the centrifugal clutch characteristics based on a rotation speed (R1) of the centrifugal clutch upstream path (10a) and a clutch torque capacity (CT) in a clutch stall state when the rotation speed (R2) of the centrifugal clutch downstream path (10b) is increasing and a throttle is fully opened, wherein in the clutch stall state, the rotation speed (R1) of the centrifugal clutch upstream path (10a) becomes substantially constant for a certain length of time.

11. The power unit (10, 50) according to Claim 1, further comprising:

a transmission upstream rotation detection sensor (700) configured to detect a rotation speed (R3) on an upstream side of the transmission (200);

a transmission downstream rotation detection sensor (701) configured to detect a rotation speed (R4) on a downstream side of the transmission (200);

a Low gear ratio storage module (606) configured to store a Low gear ratio of the transmission (200);

a Low gear ratio estimation module (604) configured to obtain a plurality of samples each indicating a relationship between a rotation speed (R3) on the upstream side of the transmission (200) and a rotation speed (R4) on the downstream side of the transmission (200) and estimate the Low gear ratio based on the plurality of samples in response to determining that a throttle angle is constant and a rotation speed (R2) of the centrifugal clutch downstream path (10b) is increasing after the straddled vehicle (1) starts running from a standstill state; and

a Low gear ratio updating module (605) configured to update the Low gear ratio stored in the Low gear ratio storage module (606) to the Low gear ratio estimated by the Low gear ratio estimation module (604),

wherein the driving force control module (654) is configured to control the driving force of the driving wheel (9), based on the centrifugal clutch characteristics read out from the centrifugal clutch characteristics storage module (603) and the Low gear ratio read out from the Low gear ratio storage module (606).

12. The power unit (10, 50) according to Claim 11, wherein

the Low gear ratio estimation module (604) is configured to estimate the Low gear ratio by approximating linearly the plurality of samples, and

a straight line obtained by approximating linearly the plurality of samples passes through a point where a rotation speed (R3) on the upstream side of the transmission (200) and a rotation speed (R4) on the downstream side of the transmission (200) are both zero.

13. The power unit (10, 50) according to Claim 1, wherein the driving force control module (654) is configured to execute a traction control based on the centrifugal clutch characteristics that are read out from the centrifugal clutch characteristics storage module (603).

14. A straddled vehicle (1) comprising the power unit (10, 50) according to any one of Claims 1 to 13.

**Patentansprüche**

1. Eine Leistungseinheit (10, 50), die in einem Grätschfahrzeug (1) angebracht werden soll, die folgende Merkmale aufweist:

eine Antriebsquelle (100), die ausgebildet ist, um eine Antriebskraft zu erzeugen;

ein Antriebsrad (9), das durch die Antriebskraft von der Antriebsquelle (100) angetrieben wird;

ein Getriebe (200), das zwischen der Antriebsquelle (100) und dem Antriebsrad (9) vorgesehen und ausgebildet ist, um ein Übersetzungsverhältnis zu verändern;

eine Fliehkraftkupplung (300), die Folgendes aufweist: ein der Fliehkraftkupplung vorgelagertes Bauteil (300a), das mechanisch mit der zu drehenden Antriebsquelle (100) verbunden ist; und ein der Fliehkraftkupplung nachgelagertes Bauteil (300b), das durch eine Zentrifugalkraft, die durch die Drehung des der Fliehkraftkupplung vorgelagerten Bauteils (300a) erzeugt wird, mit dem der Fliehkraftkupplung vorgelagerten Bauteil (300a) verbunden oder von diesem getrennt wird, wobei die Fliehkraftkupplung (300) ausgebildet ist, um eine Übertragung eines Drehmoments zwischen einem der Fliehkraftkupplung vorgelagerten Weg (10a) und einem der Fliehkraftkupplung nachgelagerten Weg (10b) durch die Zentrifugalkraft, die durch die Drehung des der Fliehkraftkupplung vorgelagerten Bauteils (300a) erzeugt wird, herzustellen oder zu unterbrechen, wobei der der Fliehkraftkupplung vorgelagerte Weg (10a) als ein Weg von der Antriebsquelle (100) zu dem der Fliehkraftkupplung vorgelagerten Bauteil (300a) definiert ist und der der Fliehkraftkupplung nachgelagerte Weg (10b) als ein Weg von dem der Fliehkraftkupplung nachgelagerten Bauteil (300b) zu dem Antriebsrad (9) definiert ist;
einen der Fliehkraftkupplung vorgelagerten Dreherfassungssensor (92), der ausgebildet ist, um eine Drehgeschwindigkeit (R1) des der Fliehkraftkupplung vorgelagerten Wegs (10a) zu erfassen;

**gekennzeichnet durch**:

ein Fliehkraftkupplungscharakteristika-Speichermodul (603), das ausgebildet ist, um Fliehkraftkupplungscharakteristika zu speichern, die eine Beziehung zwischen Drehgeschwindigkeiten (R1) des der Fliehkraftkupplung vorgelagerten Wegs (10a) und Kupplungsdrehmomentkapazitäten der Fliehkraftkupplung (300) in einem halb in Eingriff gebrachten Zustand anzeigen, wobei in dem halb in Eingriff gebrachten Zustand ein Drehmoment zwischen dem der Fliehkraftkupplung vorgelagerten Bauteil (300a) und dem der Fliehkraftkupplung nachgelagerten Bauteil (300b) dadurch übertragen wird, dass das der Fliehkraftkupplung vorgelagerte Bauteil (300a) relativ zu dem der Fliehkraftkupplung nachgelagerten Bauteil (300b) gleitet;
ein Fliehkraftkupplungscharakteristika-Schätzmodul (601), das ausgebildet ist, um die Fliehkraftkupplungscharakteristika basierend auf einer Drehgeschwindigkeit (R1) des der Fliehkraftkupplung vorgelagerten Wegs (10a) zu schätzen;
ein Fliehkraftkupplungscharakteristika-Aktualisierungsmodul (602), das ausgebildet ist, um die Fliehkraftkupplungscharakteristika, die in dem Fliehkraftkupplungscharakteristika-Speichermodul (603) gespeichert sind, zu den Fliehkraftkupplungscharakteristika zu aktualisieren, die durch das Fliehkraftkupplungscharakteristika-Schätzmodul (601) geschätzt werden; und
ein Antriebskraftsteuermodul (654), das ausgebildet ist, um eine Antriebskraft des Antriebsrads (9) basierend auf den Fliehkraftkupplungscharakteristika zu steuern, die aus dem Fliehkraftkupplungscharakteristika-Speichermodul (603) ausgelesen werden.

2. Die Leistungseinheit (10, 50) gemäß Anspruch 1, bei der:
das Fliehkraftkupplungscharakteristika-Schätzmodul (601) ausgebildet ist, um die Fliehkraftkupplungscharakteristika basierend auf einer Drehgeschwindigkeit (R1) des der Fliehkraftkupplung vorgelagerten Wegs (10a) und einer Kupplungsdrehmomentkapazität (CT) in einem ersten Zustand der Fliehkraftkupplung (300), während das Grätschfahrzeug (1) läuft, zu schätzen.

3. Die Leistungseinheit (10, 50) gemäß Anspruch 1, bei der:
das Fliehkraftkupplungscharakteristika-Schätzmodul (601) ausgebildet ist, um die Fliehkraftkupplungscharakteristika basierend auf einer Drehgeschwindigkeit (R1) des der Fliehkraftkupplung vorgelagerten Wegs (10a) und einer Kupplungsdrehmomentkapazität (CT) in einem ersten Zustand der Fliehkraftkupplung (300), während das Grätschfahrzeug (1) läuft, und einer Drehgeschwindigkeit (R1) des der Fliehkraftkupplung vorgelagerten Wegs (10a) und einer Kupplungsdrehmomentkapazität (CT) in einem zweiten Zustand der Fliehkraftkupplung (300), der sich von dem ersten Zustand unterscheidet, während das Grätschfahrzeug (1) läuft, zu schätzen.

4. Die Leistungseinheit (10, 50) gemäß Anspruch 2 oder 3, bei der:
das Fliehkraftkupplungscharakteristika-Schätzmodul (601) ausgebildet ist, um die Fliehkraftkupplungscharakteristika basierend auf einer Drehgeschwindigkeit (R1) des der Fliehkraftkupplung vorgelagerten Wegs (10a) und einer Kupplungsdrehmomentkapazität (CT) in einem ausgekuppelten Zustand zu schätzen, in dem die Fliehkraftkupplung (300) von einem in Eingriff gebrachten Zustand in einen außer Eingriff gebrachten Zustand umgeschaltet wird.

5. Die Leistungseinheit (10, 50) gemäß Anspruch 4, die ferner folgendes Merkmal aufweist:
einen der Fliehkraftkupplung nachgelagerten Dreherfassungssensor (8a), der ausgebildet ist, um eine Drehgeschwindigkeit (R2) des der Fliehkraftkupplung nachgelagerten Wegs (10b) zu erfassen, wobei:
das Fliehkraftkupplungscharakteristika-Schätzmodul (601) ausgebildet ist, um basierend auf einer Drehgeschwindigkeit (R1) des der Fliehkraftkupplung vorgelagerten Wegs (10a) und einer Drehgeschwindigkeit (R2) des der Fliehkraftkupplung nachgelagerten Wegs (10b) zu bestimmen, ob die Fliehkraftkupplung (300) sich in dem ausgekuppelten Zustand befindet oder nicht.

6. Die Leistungseinheit (10, 50) gemäß Anspruch 5, bei der:
das Fliehkraftkupplungscharakteristika-Schätzmodul (601) ausgebildet ist, um zu bestimmen, dass die Fliehkraftkupplung (300) in dem ausgekuppelten Zustand ist, wenn eine Verlangsamung der Drehgeschwindigkeit (R1) des der Fliehkraftkupplung vorgelagerten Wegs (10a) größer als oder gleich einem vorbestimmten Wert ist.

**7.** Die Leistungseinheit (10, 50) gemäß Anspruch 6, bei der:

das Fliehkraftkupplungscharakteristika-Schätzmodul (601) ausgebildet ist, um zu bestimmen, dass die Fliehkraftkupplung (300) in dem ausgekuppelten Zustand ist, wenn eine Verlangsamung der Drehgeschwindigkeit (R1) des der Fliehkraftkupplung vorgelagerten Wegs (10a) größer als oder gleich einem vorbestimmten Wert ist und die Drehgeschwindigkeit (R1) des der Fliehkraftkupplung vorgelagerten Werts (10a) kleiner als oder gleich einem vorbestimmten Wert ist.

**8.** Die Leistungseinheit (10 ,50) gemäß einem der Ansprüche 4 bis 7, bei der:

das Fliehkraftkupplungscharakteristika-Schätzmodul (601) ausgebildet ist, um die Drehgeschwindigkeit (R1) des der Fliehkraftkupplung vorgelagerten Wegs (10a) und die Kupplungsdrehmomentkapazität (CT) in dem ausgekuppelten Zustand zu erhalten durch Multiplizieren der Drehgeschwindigkeit (R1) des der Fliehkraftkupplung vorgelagerten Wegs (10a) mit einem vorbestimmten Koeffizienten.

**9.** Die Leistungseinheit (10, 50) gemäß einem der Ansprüche 4 bis 7, die ferner folgendes Merkmal aufweist:

einen der Fliehkraftkupplung nachgelagerten Dreherfassungssensor (8a), der ausgebildet ist, um eine Drehgeschwindigkeit (R2) des der Fliehkraftkupplung nachgelagerten Wegs (10b) zu erfassen, wobei:

das Getriebe (200) ein kontinuierlich variables Getriebe (CVT) zum kontinuierlichen stufenlosen Verändern von Übersetzungsverhältnissen ist, die Fliehkraftkupplung (300) an einem Weg zwischen dem Getriebe (200) und dem Antriebsrad (9) vorgesehen ist, und das Fliehkraftkupplungscharakteristika-Schätzmodul (601) ausgebildet ist, um eine Beziehung zwischen der Drehgeschwindigkeit (R1) des der Fliehkraftkupplung vorgelagerten Wegs (10a) und der Kupplungsdrehmomentkapazität (CT) in dem ausgekuppelten Zustand basierend auf einer Drehgeschwindigkeit (R2) des der Fliehkraftkupplung nachgelagerten Wegs (10b) und einem niedrigen Übersetzungsverhältnis des Getriebes (200) zu erhalten.

**10.** Die Leistungseinheit (10, 50) gemäß Anspruch 2 oder 3, die ferner folgendes Merkmal aufweist:

einen der Fliehkraftkupplung nachgelagerten Dreherfassungssensor (8a), der ausgebildet ist, um eine Drehgeschwindigkeit (R2) des der Fliehkraftkupplung nachgelagerten Wegs (10b) zu erfassen, wobei das Fliehkraftkupplungscharakteristika-Schätzmodul (601) ausgebildet ist, um die Fliehkraftkupplungscharakteristika basierend auf einer Drehgeschwindigkeit (R1) des der Fliehkraftkupplung vorgelagerten Wegs (10a) und einer Kupplungsdrehmomentkapazität (CT) in einem Kupplungsaussetzzustand zu schätzen, wenn die Drehgeschwindigkeit (R2) des der Fliehkraftkupplung nachgelagerten Wegs (10b) ansteigt und ein Drosselventil vollständig geöffnet ist, wobei in dem Kupplungsaussetzzustand die Drehgeschwindigkeit (R1) des der Fliehkraftkupplung vorgelagerten Wegs (10a) für eine bestimmte Zeitlänge im Wesentlichen konstant wird.

**11.** Die Leistungseinheit (10 ,50) gemäß Anspruch 1, die ferner folgende Merkmale aufweist:

einen dem Getriebe vorgelagerten Dreherfassungssensor (700), der ausgebildet ist, um eine Drehgeschwindigkeit (R3) auf einer vorgelagerten Seite des Getriebes (200) zu erfassen; einen dem Getriebe nachgelagerten Dreherfassungssensor (701), der ausgebildet ist, um eine Drehgeschwindigkeit (R4) auf einer nachgelagerten Seite des Getriebes (200) zu erfassen; ein Niedriges-Übersetzungsverhältnis-Speichermodul (606), das ausgebildet ist, um ein niedriges Übersetzungsverhältnis des Getriebes (200) zu speichern; ein Niedriges-Übersetzungsverhältnis-Schätzmodul (604), das ausgebildet ist, um eine Mehrzahl von Abtastwerten zu erhalten, die jeweils eine Beziehung zwischen einer Drehgeschwindigkeit (R3) auf der vorgelagerten Seite des Getriebes (200) und einer Drehgeschwindigkeit (R4) auf der nachgelagerten Seite des Getriebes (200) anzeigen, und das niedrige Übersetzungsverhältnis basierend auf der Mehrzahl von Abtastwerten zu schätzen, und zwar ansprechend auf ein Bestimmen, dass ein Drosselwinkel konstant ist und dass eine Drehgeschwindigkeit (R2) des der Fliehkraftkupplung nachgelagerten Wegs (10b) zunimmt, nachdem das Grätschfahrzeug (1) von einem Stillstandszustand zu laufen beginnt; und ein Niedriges-Übersetzungsverhältnis-Aktualisierungsmodul (605), das ausgebildet ist, um das niedrige Übersetzungsverhältnis, das in dem Niedriges-Übersetzungsverhältnis-Speichermodul (606) gespeichert ist, zu dem niedrigen Übersetzungsverhältnis zu aktualisieren, das durch das Niedriges-Übersetzungsverhältnis-Schätzmodul (604) geschätzt wird, wobei das Antriebskraftsteuermodul (654) ausgebildet ist, um die Antriebskraft des Antriebsrads (9) basierend auf den Fliehkraftkupplungscharakteristika, die aus dem Fliehkraftkupplungscharakteristika-Speichermodul (603) ausgelesen werden, und dem niedrigen Übersetzungsverhältnis, das aus dem Niedriges-Übersetzungsverhältnis-Speichermodul (606) ausgelesen wird, zu steuern.

12. Die Leistungseinheit (10, 50) gemäß Anspruch 11, bei der:

das Niedriges-Übersetzungsverhältnis-Schätzmodul (604) ausgebildet ist, um das niedrige Übersetzungsverhältnis durch lineares Annähern an die Mehrzahl von Abtastwerten zu schätzen, und

eine gerade Linie, die durch lineares Annähern an die Mehrzahl von Abtastwerten erhalten wird, durch einen Punkt verläuft, an dem eine Drehgeschwindigkeit (R3) auf der vorgelagerten Seite des Getriebes (200) und eine Drehgeschwindigkeit (R4) auf der nachgelagerten Seite des Getriebes (200) beide null sind.

13. Die Leistungseinheit (10, 50) gemäß Anspruch 1, bei der:
das Antriebskraftsteuermodul (654) ausgebildet ist, um eine Traktionssteuerung basierend auf den Fliehkraftkupplungscharakteristika auszuführen, die aus dem Fliehkraftkupplungscharakteristika-Speichermodul (603) ausgelesen werden.

14. Ein Grätschfahrzeug (1) mit der Leistungseinheit (10, 50) gemäß einem der Ansprüche 1 bis 13.

## Revendications

1. Groupe moteur (10, 50) destiné à être monté dans un véhicule à enfourcher (1), comprenant:

une source d'entraînement (100) configurée pour générer une force motrice;
une roue motrice (9) entraînée par la force motrice provenant de la source d'entraînement (100);
une transmission (200) prévue entre la source d'entraînement (100) et la roue motrice (9) et configurée pour changer un rapport de démultiplication;
un embrayage centrifuge (300) comprenant: un élément amont de l'embrayage centrifuge (300a) qui est connecté mécaniquement à la source d'entraînement (100) à mettre en rotation; et un élément aval de l'embrayage centrifuge (300b) qui est connecté à ou déconnecté de l'élément amont de l'embrayage centrifuge (300a) par une force centrifuge générée par la rotation de l'élément amont de l'embrayage centrifuge (300a), où l'embrayage centrifuge (300) est configuré pour effectuer ou interrompre la transmission d'un couple entre un trajet amont de l'embrayage centrifuge (10a) et un trajet aval de l'embrayage centrifuge (10b) par la force centrifuge générée par la rotation de l'élément amont de l'embrayage centrifuge (300a), le trajet amont de l'embrayage centrifuge (10a) est défini comme trajet allant de la source d'entraînement (100) à l'élément amont de l'embrayage centrifuge (300a), et le trajet aval de l'embrayage centrifuge (10b) est défini comme trajet allant de l'élément aval de l'embrayage centrifuge (300b) à la roue motrice (9);
un capteur de détection de rotation amont de l'embrayage centrifuge (92) configuré pour détecter une vitesse de rotation (R1) du trajet amont de l'embrayage centrifuge (10a);
**caractérisé par**
un module de mémoire de caractéristiques de l'embrayage centrifuge (603) configuré pour mémoriser les caractéristiques de l'embrayage centrifuge indiquant un rapport entre les vitesses de rotation (R1) du trajet amont de l'embrayage centrifuge (10a) et les capacités de couple de l'embrayage de l'embrayage centrifuge (300) dans un état semi-embrayé, où, à l'état semi-embrayé, un couple est transmis entre l'élément amont de l'embrayage centrifuge (300a) et l'élément aval de l'embrayage centrifuge (300b) par l'élément amont de l'embrayage centrifuge (300a) coulissant par rapport à l'élément aval de l'embrayage centrifuge (300b);
un module d'estimation de caractéristiques de l'embrayage centrifuge (601) configuré pour estimer les caractéristiques de l'embrayage centrifuge sur base d'une vitesse de rotation (R1) du trajet amont de l'embrayage centrifuge (10a);
un module de mise à jour de caractéristiques de l'embrayage centrifuge (602) configuré pour mettre à jour les caractéristiques de l'embrayage centrifuge mémorisées dans le module de mémoire de caractéristiques de l'embrayage centrifuge (603) aux caractéristiques de l'embrayage centrifuge qui sont estimées par le module d'estimation de caractéristiques de l'embrayage centrifuge (601); et
un module de commande de force motrice (654) configuré pour commander une force motrice de la roue motrice (9) sur base des caractéristiques de l'embrayage centrifuge qui sont lues du module de mémoire de caractéristiques de l'embrayage centrifuge (603).

**2.** Groupe moteur (10, 50) selon la revendication 1, dans lequel

le module d'estimation de caractéristiques de l'embrayage centrifuge (601) est configuré pour estimer les caractéristiques de l'embrayage centrifuge sur base d'une vitesse de rotation (R1) du trajet amont de l'embrayage centrifuge (10a) et d'une capacité de couple de l'embrayage (CT) dans un premier état de l'embrayage centrifuge (300) tandis que le véhicule à enfourcher (1) est en marche.

**3.** Groupe moteur (10, 50) selon la revendication. 1, dans lequel

le module d'estimation de caractéristiques de l'embrayage centrifuge (601) est configuré pour estimer les caractéristiques de l'embrayage centrifuge sur base d'une vitesse de rotation (R1) du trajet amont de l'embrayage centrifuge (10a) et d'une capacité de couple de l'embrayage (CT) dans un premier état de l'embrayage centrifuge (300) tandis que le véhicule à enfourcher (1) est en marche, et d'une vitesse de rotation (R1) du trajet amont de l'embrayage centrifuge (10a) et d'une capacité de couple de l'embrayage (CT) dans un deuxième état de l'embrayage centrifuge (300) qui diffère du premier état tandis que le véhicule à enfourcher (1) est en marche.

**4.** Groupe moteur (10, 50) selon la revendication 2 ou 3, dans lequel

le module d'estimation de caractéristiques de l'embrayage centrifuge (601) est configuré pour estimer les caractéristiques de l'embrayage centrifuge sur base d'une vitesse de rotation (R1) du trajet amont de l'embrayage centrifuge (10a) et d'une capacité de couple de l'embrayage (CT) dans un état de débrayage où l'embrayage centrifuge (300) est commuté d'un état embrayé à un état débrayé.

**5.** Groupe moteur (10, 50) selon la revendication 4, comprenant par ailleurs:

un capteur de détection de rotation aval de l'embrayage centrifuge (8a) configuré pour détecter une vitesse de rotation (R2) du trajet aval de l'embrayage centrifuge (10b),
dans lequel
le module d'estimation de caractéristiques de l'embrayage centrifuge (601) est configuré pour déterminer si l'embrayage centrifuge (300) est ou non à l'état de débrayage sur base d'une vitesse de rotation (R1) du trajet amont de l'embrayage centrifuge (10a) et d'une vitesse de rotation (R2) du trajet aval de l'embrayage centrifuge (10b).

**6.** Groupe moteur (10, 50) selon la revendication. 5, dans lequel

le module d'estimation de caractéristiques de l'embrayage centrifuge (601) est configuré pour déterminer que l'embrayage centrifuge (300) est à l'état de débrayage lorsqu'une décélération de la vitesse de rotation (R1) du trajet amont de l'embrayage centrifuge (10a) est égale ou supérieure à une valeur prédéterminée.

**7.** Groupe moteur (10, 50) selon la revendication 6, dans lequel

le module d'estimation de caractéristiques de l'embrayage centrifuge (601) est configuré pour déterminer que l'embrayage centrifuge (300) est à l'état de débrayage lorsqu'une décélération de la vitesse de rotation (R1) du trajet amont de l'embrayage centrifuge (10a) est égale ou supérieure à une valeur prédéterminée et que la vitesse de rotation (R1) du trajet amont de l'embrayage centrifuge (10a) est égale ou inférieure à une valeur prédéterminée.

**8.** Groupe moteur (10, 50) selon l'une quelconque des revendications 4 à 7, dans lequel

le module d'estimation de caractéristiques de l'embrayage centrifuge (601) est configuré pour obtenir la vitesse de rotation (R1) du trajet amont de l'embrayage centrifuge (10a) et la capacité de couple de l'embrayage (CT) à l'état débrayé en multipliant la vitesse de rotation (R1) du trajet amont de l'embrayage centrifuge (10a) par un coefficient prédéterminé.

**9.** Groupe moteur (10, 50) selon l'une quelconque des revendications 4 à 7, comprenant par ailleurs:

un capteur de détection de rotation aval de l'embrayage centrifuge (8a) configuré pour détecter une vitesse de rotation (R2) du trajet aval de l'embrayage centrifuge (10b),
dans lequel
la transmission (200) est une transmission à variation continue (CVT) permettant de changer les rapports de démultiplication de manière continue et sans paliers,
l'embrayage centrifuge (300) est prévu sur un trajet entre la transmission (200) et la roue motrice (9), et
le module d'estimation de caractéristiques de l'embrayage centrifuge (601) est configuré pour obtenir un rapport entre la vitesse de rotation (R1) du trajet amont de l'embrayage centrifuge (10a) et la capacité de couple de l'embrayage (CT) à l'état de débrayage sur base d'une vitesse de rotation (R2) du trajet aval de l'embrayage centrifuge (10b) et d'un faible rapport de démultiplication de la transmission (200).

**10.** Groupe moteur (10, 50) selon la revendication 2 ou 3, comprenant par ailleurs:

un capteur de détection de rotation aval de l'embrayage centrifuge (8a) configuré pour détecter une vitesse de rotation (R2) du trajet aval de l'embrayage centrifuge (10b),

dans lequel le module d'estimation de caractéristiques de l'embrayage centrifuge (601) est configuré pour estimer les caractéristiques de l'embrayage centrifuge sur base d'une vitesse de rotation (R1) du trajet amont de l'embrayage centrifuge (10a) et d'une capacité de couple de l'embrayage (CT) dans un état de démarrage de l'embrayage lorsque la vitesse de rotation (R2) du trajet aval de l'embrayage centrifuge (10b) augmente et qu'une soupape d'étranglement est complètement ouverte, où, à l'état de démarrage de l'embrayage, la vitesse de rotation (R1) du trajet amont de l'embrayage centrifuge (10a) devient sensiblement constante pendant un certain laps de temps.

11. Groupe moteur (10, 50) selon la revendication 1, comprenant par ailleurs:

un capteur de détection de rotation amont de la transmission (700) configuré pour détecter une vitesse de rotation (R3) d'un côté amont de la transmission (200);
un capteur de détection de rotation aval de la transmission (701) configuré pour détecter une vitesse de rotation (R4) d'un côté aval de la transmission (200);
un module de mémoire de faible rapport de démultiplication (606) configuré pour mémoriser un faible rapport de démultiplication de la transmission (200);
un module d'estimation de faible rapport de démultiplication (604) configuré pour obtenir une pluralité d'échantillons indiquant, chacun, un rapport entre une vitesse de rotation (R3) du côté amont de la transmission (200) et une vitesse de rotation (R4) du côté aval de la transmission (200) et pour estimer le faible rapport de démultiplication sur base de la pluralité d'échantillons en réponse à la détermination que l'angle de la soupape d'étranglement est constant et que la vitesse de rotation (R2) du trajet aval de l'embrayage centrifuge (10b) augmente après que le véhicule à enfourcher (1) commence à rouler à partir d'un état d'arrêt; et
un module de mise à jour de faible rapport de démultiplication (605) configuré pour mettre à jour le faible rapport de démultiplication mémorisé dans le module de mémoire de faible rapport de démultiplication (606) au faible rapport de démultiplication estimé par le module d'estimation de faible rapport de démultiplication (604),
dans lequel le module de commande de force motrice (654) est configuré pour commander la force motrice de la roue motrice (9) sur base des caractéristiques de l'embrayage centrifuge lues du module de mémoire de caractéristiques de l'embrayage centrifuge (603) et du faible rapport de démultiplication lu du module de mémoire de faible rapport de démultiplication (606).

12. Groupe moteur (10, 50) selon la revendication 11, dans lequel
le module d'estimation de faible rapport de démultiplication (604) est configuré pour estimer le faible rapport de démultiplication en approximant linéairement la pluralité d'échantillons, et
une ligne droite obtenue en approximant linéairement la pluralité d'échantillons passe par un point où une vitesse de rotation (R3) du côté amont de la transmission (200) et une vitesse de rotation (R4) du côté aval de la transmission (200) sont toutes deux zéro.

13. Groupe moteur (10, 50) selon la revendication 1, dans lequel
le module de commande de force motrice (654) est configuré pour exécuter un contrôle de traction sur base des caractéristiques de l'embrayage centrifuge lues du module de mémoire de caractéristiques de l'embrayage centrifuge (603).

14. Véhicule à enfourcher (1) comprenant le groupe moteur (10, 50) selon l'une quelconque des revendications 1 à 13.

FIG. 1

F ←→ Re

EP 3 263 940 B1

FIG. 2

FIG. 3

FIG. 4

F

L ← → R

Re

FIG. 5

## FIG. 6

FIG. 7

*FIG. 8*

FIG. 9

*FIG. 10*

DRIVING FORCE CONTROL UNIT — 600

- 8a CENTRIFUGAL CLUTCH DOWNSTREAM ROTATION DETECTION SENSOR
- 8b DRIVEN WHEEL ROTATION DETECTION SENSOR
- 92 CENTRIFUGAL CLUTCH UPSTREAM ROTATION DETECTION SENSOR
- 93 THROTTLE ANGLE SENSOR

- 651 SLIP CALCULATION MODULE
- 652 TARGET SLIP CALCULATION MODULE
- 601 CENTRIFUGAL CLUTCH CHARACTERISTICS ESTIMATION MODULE
- 611 VEHICLE INFORMATION STORAGE MODULE
- 602 CENTRIFUGAL CLUTCH CHARACTERISTICS UPDATING MODULE
- 603 CENTRIFUGAL CLUTCH CHARACTERISTICS STORAGE MODULE
- 654 OUTPUT CONTROL MODULE

- 639 IGNITION PLUG
- 640 FUEL INJECTION UNIT
- 641 THROTTLE ACTUATOR

44

*FIG. 11*

## FIG. 12

START

OBTAIN VEHICLE INFORMATION — S201

IS THROTTLE FULLY CLOSED AND IS ROTATION SPEED OF CENTRIFUGAL CLUTCH DOWNSTREAM PATH DECREASING? — S202

NO

YES

ROTATION SPEED IS IN UPDATING ROTATION SPEED AREA? — S203

NO

YES

RELATION IS EQUAL TO OR SMALLER THAN APPROXIMATION TO DECELERATION LINE? — S204

NO

YES

IS CLUTCH-OUT STATE GENERATED? — S205

NO

YES

ESTIMATE ROTATION SPEED OF CENTRIFUGAL CLUTCH UPSTREAM PATH IN CLUTCH-OUT STATE AND CLUTCH TORQUE IN CLUTCH-OUT STATE BASED ON ROTATION SPEED OF CENTRIFUGAL CLUTCH UPSTREAM PATH IN CLUTCH-OUT STATE — S206

END

## FIG. 13

## FIG. 14

```
                    ( START )
                        │
          ┌─────────────┤
          │   ┌──────────────────────────────┐
          │   │ OBTAIN VEHICLE INFORMATION    ├─── S201
          │   └──────────────────────────────┘
          │            │
          │          ╱   ╲
          │         ╱ IS THROTTLE ╲
          │        ╱  FULLY CLOSED  ╲         S202
          │   NO  ╱      AND          ╲
          ◄──────  IS ROTATION SPEED OF CENTRIFUGAL
          │       ╲ CLUTCH DOWNSTREAM PATH  ╱
          │        ╲   DECREASING?        ╱
          │         ╲                   ╱
          │          ╲      │ YES      ╱
          │                 │
          │               ╱   ╲           S203
          │   NO        ╱ ROTATION SPEED ╲
          ◄──────────  ╱ IS IN CLUTCH-OUT ╲
          │            ╲ STATE UPDATING    ╱
          │             ╲    AREA?        ╱
          │                 │ YES
          │               ╱   ╲           S204
          │             ╱ RELATION IS ╲
          │   NO       ╱ EQUAL TO OR SMALLER ╲
          ◄──────────  ╱ THAN APPROXIMATION TO ╲
          │            ╲ DECELERATION LINE?   ╱
          │                 │ YES
          │               ╱   ╲           S205
          │   NO        ╱ IS CLUTCH-OUT ╲
          ◄──────────  ╱ STATE GENERATED? ╲
          │            ╲                  ╱
          │                 │ YES
          │   ┌──────────────────────────────────┐
          │   │ ESTIMATE ROTATION SPEED OF         │
          │   │ CENTRIFUGAL CLUTCH UPSTREAM PATH IN│
          │   │ CLUTCH-OUT STATE AND CLUTCH TORQUE ├─ S207
          │   │ IN CLUTCH-OUT STATE BASED ON       │
          │   │ ROTATION SPEED OF CENTRIFUGAL CLUTCH│
          │   │ DOWNSTREAM PATH IN CLUTCH-OUT STATE │
          │   └──────────────────────────────────┘
          │            │
          └────────( END )
```

FIG. 15

FIG. 16

FIG. 17

```
                    ( START )
                        │
                        ▼
        ┌───────────────────────────────┐
        │     ESTIMATE RELATIONSHIP     │
        │     BETWEEN ROTATION SPEED    │
        │      OF CENTRIFUGAL CLUTCH    │
        │  UPSTREAM PATH IN CLUTCH STALL│─── S301
        │    STATE AND CLUTCH TORQUE    │
        │      IN CLUTCH STALL STATE    │
        └───────────────────────────────┘
                        │
                        ▼
        ┌───────────────────────────────┐
        │      ESTIMATE CENTRIFUGAL     │─── S302
        │    CLUTCH CHARACTERISTICS     │
        └───────────────────────────────┘
                        │
                        ▼
        ┌───────────────────────────────┐
        │       UPDATE CENTRIFUGAL      │─── S303
        │    CLUTCH CHARACTERISTICS     │
        └───────────────────────────────┘
                        │
                        ▼
                    (  END  )
```

*FIG. 18*

```
                    ( START )
                        │
                        ▼
          ┌──────────────────────────────┐
          │  OBTAIN VEHICLE INFORMATION   │──── S401
          └──────────────────────────────┘
                        │
                        ▼
                                      S402
              ╱─────────────────╲
    NO       ╱    IS THROTTLE     ╲
◄───────────      FULLY OPENED?
             ╲                   ╱
              ╲─────────────────╱
                        │ YES
                        ▼
                                          S403
              ╱───────────────────────╲
    NO       ╱    DOES ROTATION         ╲
◄───────────    SPEED ENTER CLUTCH STALL
             ╲  STATE UPDATING AREA?    ╱
              ╲───────────────────────╱
                        │ YES
                        ▼
                                      S404
              ╱─────────────────╲
    NO       ╱   IS CLUTCH STALL  ╲
◄───────────    STATE GENERATED?
             ╲                   ╱
              ╲─────────────────╱
                        │ YES
                        ▼
          ┌──────────────────────────────────┐
          │   ESTIMATE ROTATION SPEED OF      │
          │ CENTRIFUGAL CLUTCH UPSTREAM PATH IN│
          │ CLUTCH STALL STATE AND CLUTCH TORQUE│── S405
          │    IN CLUTCH STALL STATE BASED ON  │
          │ ROTATION SPEED OF CENTRIFUGAL CLUTCH│
          │ UPSTREAM PATH IN CLUTCH STALL STATE │
          └──────────────────────────────────┘
                        │
                        ▼
                    ( END )
```

FIG. 19

FIG. 20

FIG. 21

*FIG. 22*

```
          ( START )
              │
              ▼
┌───────────────────────────┐
│   ESTIMATE RELATIONSHIP    │
│   BETWEEN ROTATION SPEED   │
│   OF CENTRIFUGAL CLUTCH    │      S501
│ UPSTREAM PATH IN CLUTCH STALL │
│   STATE AND CLUTCH TORQUE  │
│     IN CLUTCH STALL STATE  │
└───────────────────────────┘
              │
              ▼
┌───────────────────────────┐
│   ESTIMATE RELATIONSHIP    │
│   BETWEEN ROTATION SPEED   │
│   OF CENTRIFUGAL CLUTCH    │      S502
│ UPSTREAM PATH IN CLUTCH-OUT │
│   STATE AND CLUTCH TORQUE  │
│     IN CLUTCH-OUT STATE    │
└───────────────────────────┘
              │
              ▼
┌───────────────────────────┐
│   ESTIMATE RELATIONSHIP    │
│   BETWEEN CENTRIFUGAL      │      S503
│  CLUTCH CHARACTERISTICS    │
└───────────────────────────┘
              │
              ▼
┌───────────────────────────┐
│   UPDATE CENTRIFUGAL       │      S504
│  CLUTCH CHARACTERISTICS    │
└───────────────────────────┘
              │
              ▼
          ( END )
```

56

FIG. 23

FIG. 24

FIG. 25

```
                    ┌─────────┐
                    │  START  │
                    └────┬────┘
                         │
        ┌────────────────┤
        │                ▼
        │   ┌──────────────────────────┐
        │   │  CALCULATE SLIP AMOUNT   │── S601
        │   │     OF DRIVING WHEEL     │
        │   └─────────────┬────────────┘
        │                 ▼
        │      ┌──────────────────────┐
        │      │   CALCULATE TARGET   │── S602
        │      │     SLIP AMOUNT      │
        │      └──────────┬───────────┘
        │                 ▼
        │            ╱─────────────╲
        │          ╱   IS SLIP AMOUNT  ╲ ── S603
        │   NO   ╱  OF DRIVING WHEEL EQUAL ╲
        ◄──────╲  TO OR LARGER THAN TARGET ╱
        │        ╲     SLIP AMOUNT?     ╱
        │          ╲─────────┬───────╱
        │                    │ YES
        │   ┌────────────────┤
        │   │                ▼
        │   │   ┌──────────────────────────┐
        │   │   │     EXECUTE CONTROL      │
        │   │   │   TO CAUSE ROTATION      │── S604
        │   │   │  SPEED TO APPROACH TO    │
        │   │   │  TARGET ROTATION SPEED   │
        │   │   └─────────────┬────────────┘
        │   │                 ▼
        │   │            ╱─────────────╲
        │   │          ╱   IS SLIP AMOUNT  ╲ ── S605
        │   │  NO    ╱   OF DRIVING WHEEL   ╲
        │   └──────╲   SMALLER THAN TARGET  ╱
        │            ╲     SLIP AMOUNT?     ╱
        │              ╲─────────┬───────╱
        │                        │ YES
        │            ┌───────────▼──────────────┐
        │            │     END CONTROL TO       │
        │            │    CAUSE ROTATION        │── S606
        │            │  SPEED TO APPROACH TO    │
        │            │  TARGET ROTATION SPEED   │
        │            └───────────┬──────────────┘
        └────────────────────────┘
```

*FIG. 26*

*FIG. 27*

EP 3 263 940 B1

61

*FIG. 28*

START

OBTAIN VEHICLE INFORMATION — S701

IS THROTTLE
ANGLE CONSTANT
AND
IS ROTATION SPEED OF CENTRIFUGAL
CLUTCH DOWNSTREAM PATH
INCREASING?  S702

NO

YES

DOES
GEAR RATIO FALL IN LOW
GEAR RATIO LEARNING
RANGE?  S703

NO

YES

IS GEAR RATIO
CONSTANT?  S704

NO

YES

OBTAIN SAMPLES — S705

HAVE n SAMPLES
BEEN OBTAINED?  S706

NO

YES

ESTIMATE LOW GEAR RATIO
BASED ON n SAMPLES — S707

UPDATE LOW GEAR RATIO — S708

END

FIG. 29

FIG. 30

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5240076 A
- US 20060032689 A
- JP 2006071096 A